(19) **Europäisches Patentamt**
**European Patent Office**
**Office européen des brevets**

(11) **EP 3 090 307 B1**

(12) **FASCICULE DE BREVET EUROPEEN**

(45) Date de publication et mention
de la délivrance du brevet:
**02.08.2023 Bulletin 2023/31**

(21) Numéro de dépôt: **14830997.4**

(22) Date de dépôt: **22.12.2014**

(51) Classification Internationale des Brevets (IPC):
**G02C 13/00** (2006.01)

(52) Classification Coopérative des Brevets (CPC):
**G02C 13/005; G02C 13/003; G06F 16/245**

(86) Numéro de dépôt international:
**PCT/FR2014/053502**

(87) Numéro de publication internationale:
**WO 2015/101736 (09.07.2015 Gazette 2015/27)**

(54) **PROCÉDÉ DE DÉTERMINATION D'UNE DÉFINITION GÉOMÉTRIQUE D'UN ÉQUIPEMENT OPTIQUE PERSONNALISÉ**

BESTIMMUNGSPROZESS VON MINDESTENS EINEM GEOMETRISCHEN PARAMETER EINER PERSONALISIERTEN OPTISCHEN AUSRÜSTUNG

PROCESS OF DETERMINATION OF ONE GEOMETRICAL PARAMETER OF A PERSONALIZED OPTICAL EQUIPMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.01.2014 FR 1450019**

(43) Date de publication de la demande:
**09.11.2016 Bulletin 2016/45**

(73) Titulaire: **Essilor International**
**94220 Charenton-le-Pont (FR)**

(72) Inventeurs:
• **REGO, Carlos**
**F-94220 Charenton Le Pont (FR)**
• **AMIR, Bruno**
**F-94220 Charenton Le Pont (FR)**

• **BROUTIN, Guillaume**
**F-94220 Charenton Le Pont (FR)**
• **BOIFFIER, Maxime**
**F-94220 Charenton Le Pont (FR)**
• **BONNIN, Thierry**
**F-94220 Charenton Le Pont (FR)**
• **TESSIERES, Mélanie**
**F-94220 Charenton Le Pont (FR)**
• **MOINE, Jérôme**
**F-94220 Charenton Le Pont (FR)**

(74) Mandataire: **Jacobacci Coralis Harle**
**32, rue de l'Arcade**
**75008 Paris (FR)**

(56) Documents cités:
**EP-A1- 1 011 006     US-A- 4 762 407**
**US-A1- 2003 123 026     US-A1- 2013 231 941**

Processed by Luminess, 75001 PARIS (FR)

## Description

DOMAINE TECHNIQUE AUQUEL SE RAPPORTE L'INVENTION

La présente invention concerne de manière générale le domaine de la personnalisation des lunettes de vue.

Elle concerne plus particulièrement un procédé de fabrication d'une monture personnalisée à partir d'une définition géométrique d'un équipement optique personnalisé adapté à son porteur.

ARRIERE-PLAN TECHNOLOGIQUE

Un équipement optique comprend une monture de lunettes et une paire de lentilles ophtalmiques montées dans cette monture.

Les équipements optiques actuels ne sont pas définis de manière personnalisée.

Le porteur et son opticien choisissent parmi un ensemble limité de spécimen de monture, celui qui convient le mieux, en fonction des souhaits esthétiques du porteur, de considérations pratiques (activités sportives...) et économiques (prix), de la fonction optique assurée par les futures lunettes (besoin de correction visuelle et/ou protection de type filtrage de la lumière) et de la forme du visage du porteur (hauteur des cercles, longueur de branche, galbe, forme des cercles...). Les lentilles ophtalmiques sont également déterminées selon plusieurs critères, dont la correction visuelle, le besoin de protection de type filtrage de la lumière, les activités effectuées par le porteur avec l'équipement optique, etc.... Il est alors difficile pour le porteur de trouver un équipement optique qui réponde à l'ensemble de ses besoins.

Pour tenter de pallier partiellement à ce problème, l'opticien effectue un ajustage de la monture directement sur le visage du porteur, manuellement, en fonction des indications de confort que lui fournit le porteur et selon un savoir-faire empirique.

Cet ajustage est long et fastidieux pour l'opticien et le porteur, et sa qualité, importante pour la correction visuelle, dépend de l'opérateur et du soin accordé à cette opération.

Il est souvent réalisé à la réception de la paire de lunettes finie, c'est-à-dire dans laquelle les lentilles ophtalmiques ont été montées.

A ce stade, il existe également un risque que l'on se rende compte que l'équipement optique obtenu n'est pas adapté de façon convenable au futur porteur.

Ce processus ne permet donc pas toujours la réalisation d'un équipement optique dont les caractéristiques optiques et mécaniques sont précisément adaptées au porteur.

Il existe donc un besoin de fourniture d'un équipement optique personnalisé adapté à son porteur dont au moins la monture personnalisée répond à une définition géométrique conçue à partir de données géométrico-morphologiques, c'est-à-dire de données dépendant à la fois de la géométrie de la monture et de la morphologie du porteur.

Il existe, en outre, un besoin de s'assurer que l'équipement optique personnalisé est réalisable et un besoin d'évaluer la qualité et la justesse de l'adaptation de l'équipement à son porteur, de préférence de façon anticipée.

De plus, la détermination d'un équipement personnalisé est complexe, car elle dépend de nombreux paramètres, notamment du choix de la monture effectué par le porteur (type de monture -cerclée, percée, rainée-, géométrie de la monture, matière de la monture, propriétés mécaniques de la monture ...), des paramètres liés au porteur : réfraction, morphologie du visage....

Il n'est pas facile de déterminer l'ensemble de ces paramètres et il s'avère par ailleurs difficile d'obtenir des résultats utilement exploitables sans que la mise en oeuvre de cette détermination ne devienne trop fastidieuse et consommatrice de ressources, notamment en ce qui concerne le protocole de prise de mesure et le traitement de données. On connaît par exemple du document EP1011006 un procédé de détermination d'une définition géométrique d'une monture personnalisée. On connait également des documents US2003/0123026 et US4762407 des méthodes de détermination d'un équipement optique comportant une monture et des lentilles ophthalmiques.

OBJET DE L'INVENTION

Afin de remédier aux inconvénients précités de l'état de la technique, la présente invention - dont l'étendue de protection est définie dans les revendications 1 à 16, propose un procédé de fabrication d'une monture personnalisée à partir d'une définition géométrique d'un équipement optique personnalisé permettant notamment d'accueillir les lentilles ophtalmiques souhaitées et de présenter un confort optimal pour le porteur tout en satisfaisant les critères esthétiques désirés par le porteur.

Plus particulièrement, on propose selon l'invention un procédé de fabrication d'une monture personnalisée à partir d'une définition géométrique d'un équipement optique personnalisé adapté à son porteur, conforme à la revendication 1.

Grâce au procédé selon l'invention, il est possible de prendre en compte les choix du porteur en termes de type de monture choisie (forme, matériau, monture cerclée ou percée ou rainée, etc....) et les paramètres liés à la tête du porteur (taille du visage, morphologie du visage...).

On entend notamment par grandeur morphologique toute les dimensions, distances ou angles, associées à la tête du porteur ainsi que les formes d'éléments particuliers de la tête du porteur et leur agencement relatif les unes par rapport aux autres.

Ce procédé permet ainsi l'amélioration du confort de port : les zones de la tête du porteur qui supportent la monture sont principalement le dessus du nez et la zone allant des tempes au dessus des oreilles. Le procédé permet de définir les éléments de la monture tels que le pont, les éléments d'appui nasal, ou les branches d'après les données géométriques issues du visage du porteur.

Concernant plus particulièrement les branches, leur écartement et leur longueur pourront être dimensionnés pour offrir un port optimal (sans trop ni trop peu maintenir l'équipement optique).

Ce procédé permet ainsi l'amélioration de l'esthétique : la forme des cercles (ou des lentilles dans le cas d'équipement percé ou rainé), leur taille, ou leur positionnement sont définis par le procédé d'après les données géométriques issues du visage du porteur.

Par exemple, dans le cas d'une monture personnalisée en plastique le pont et les éléments d'appui nasal auront une forme spécifiquement dimensionnée pour le porteur.

Le procédé selon l'invention permet également d'adapter la forme de la monture personnalisée au nez, aux sourcils, à l'arrondi du visage : il est possible par exemple de modifier la forme de la monture proche de la région nasale pour permettre le passage du nez, et/ou d'accentuer ou adoucir certaines courbes de la monture personnalisée pour suivre l'arrondi du sourcil ou l'ovale du visage, ou au contraire pour s'en éloigner de manière à souligner ou renforcer les traits du visage du porteur.

Le procédé permet une personnalisation importante car il laisse le libre choix au porteur ou à l'opticien de régler un ensemble de paramètres géométriques de la monture en fonction de critères esthétiques souhaités par le porteur, ces critères pouvant notamment résulter d'une mode ou d'une activité physique du porteur.

Le procédé permet enfin de générer des modèles d'équipements optiques personnalisés permettant éventuellement un essayage à distance via internet ou virtuel chez l'opticien.

D'autres caractéristiques non limitatives et avantageuses du procédé conforme à l'invention sont énoncées aux revendications 2 à 16.

Selon d'autres caractéristiques non limitatives et avantageuses du procédé selon l'invention:

- lorsque ledit critère d'ajustage de personnalisation comprend une contrainte sur une distance entre un point singulier de la tête du porteur et au moins un point singulier des cercles de la monture personnalisée ou au moins un point singulier des lentilles montées sur la monture personnalisée ou au moins un point singulier du contour des lentilles montées sur la monture personnalisée, le critère d'ajustage de personnalisation est déterminé de telle sorte que cette distance soit supérieure à une valeur minimale de distance, ou de manière à minimiser un écart entre cette distance et une valeur cible de distance ;

- la monture étant destinée à accueillir des lentilles de correction visuelle, la valeur dudit paramètre géométrique de personnalisation de la monture personnalisée est déterminée en fonction de la correction visuelle réalisée par les lentilles ;
- le critère d'ajustage de personnalisation est déterminé en fonction de la correction visuelle réalisée par les lentilles ;
- le paramètre géométrique de personnalisation comporte au moins un des paramètres géométriques de monture suivants : l'angle de galbe, l'angle pantoscopique, la longueur des branches, la largeur du pont, la forme ou une des dimensions de la monture, le positionnement ou l'orientation des éléments d'appui de la monture sur le nez du porteur.
- il comporte les étapes suivantes :

  a1) déterminer une modélisation d'une monture de référence, avec, dans un même référentiel, au moins un modèle des éléments d'appui nasal de la monture, un modèle des cercles de la monture ou du contour des lentilles ophtalmiques montées sur la monture et un modèle d'une partie des branches de la monture de référence,
  b1) déterminer une modélisation au moins partielle de la tête du porteur, avec, dans un même référentiel, au moins un modèle d'une partie du nez, un modèle d'une partie des oreilles et au moins un modèle d'une partie de la zone médiane du visage comprenant les sourcils, les joues, et les tempes,
  c1) effectuer une simulation du positionnement de la monture de référence sur la tête du porteur, en superposant, sur la modélisation de la tête du porteur, les zones correspondantes de la modélisation de ladite monture de référence,
  d1) dans la configuration de l'étape c1), déterminer la valeur d'au moins un paramètre géométrico-morphologique de référence lié à la position relative de ladite monture de référence par rapport à la tête du porteur ;
  e1) déterminer, en fonction de la valeur du paramètre géométrico-morphologique de référence déterminée à l'étape d1), la valeur du paramètre géométrique de personnalisation de l'équipement personnalisé.

- il comporte les étapes suivantes :

  a2) identifier une monture de référence,
  b2) déterminer la valeur d'au moins un paramètre géométrique de référence sur ladite monture de référence,
  c2) placer en position d'utilisation ladite monture de référence sur la tête du porteur,
  d2) dans la configuration de l'étape c2), déterminer la valeur d'au moins un paramètre géométrico-morphologique lié à la position relative de ladite monture de référence par rapport à la tête du porteur,

e2) déterminer la valeur du paramètre géométrique de personnalisation, à partir des valeurs du paramètre géométrico-morphologique mesuré à l'étape d2) et du paramètre géométrique de référence de ladite monture de référence ;

- la mesure du paramètre géométrico-morphologique de l'étape d2) comporte la capture d'au moins une image de la tête du porteur équipée de la monture de référence ;
- après avoir déterminé la définition géométrique dudit équipement personnalisé on transmet cette définition géométrique au porteur pour validation par lui ;
- après avoir déterminé la définition géométrique des lentilles ophtalmiques personnalisées, on réalise un renvoi d'information sur la faisabilité de la fabrication de ces lentilles ophtalmiques personnalisées ;
- à partir de ladite définition géométrique, l'équipement personnalisé est réalisé au moins partiellement par prototypage rapide additif ou par usinage ;

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique en perspective d'une monture de lunettes de référence (traits pleins) et d'une modélisation partielle de la tête du porteur (traits pointillés),
- la figure 2 est une vue schématique de dessus de la monture de lunettes de référence et de la modélisation partielle de la tête de la figure 1,
- la figure 3 est une vue schématique de profil de la tête du porteur avec la monture de lunettes de référence,
- la figure 4 est une vue schématique de face de la tête du porteur et de la monture de lunettes de référence de la figure 3,
- les figures 5 et 6 illustrent un ajustage correct d'une branche de la monture de lunettes de référence sur l'oreille du porteur,
- la figure 7 est une vue schématique des différentes étapes d'un mode de réalisation du procédé selon l'invention.

Les définitions de termes suivantes sont applicables pour la suite de la description :

- Par « équipement optique », on entend un équipement comprenant une monture de lunettes et au moins une lentille ophtalmique destinée à être montée ou montée dans cette monture.

- Par « **définition géométrique** » d'un élément, on entend une définition géométrique réelle ou virtuelle de cet élément. Une définition géométrique réelle de l'élément peut être l'élément lui-même ou une modélisation réelle de cet élément, réalisée par exemple sous la forme d'un prototype comprenant seulement certaines parties de cet élément. Une définition géométrique virtuelle de l'élément consiste en une modélisation numérique de cet élément comportant par exemple un fichier de données regroupant les valeurs de différentes caractéristiques géométriques de cet élément. La définition géométrique virtuelle de l'élément peut également comprendre tout fichier de données regroupant les coordonnées dans un même référentiel de différents points singuliers de l'élément.

Cet élément peut être un équipement personnalisé, une monture personnalisée et/ou une monture générique et/ou une lentille ophtalmique personnalisée ou générique.

Lorsque l'élément est une monture, les différentes caractéristiques géométriques de cet élément sont, par exemple, l'angle de galbe, l'angle pantoscopique, la longueur des branches, la largeur du pont, la hauteur des éléments d'appui nasal, la forme de la monture ou une des dimensions de la monture, le positionnement ou l'orientation des éléments d'appui de la monture sur un nez d'un porteur.

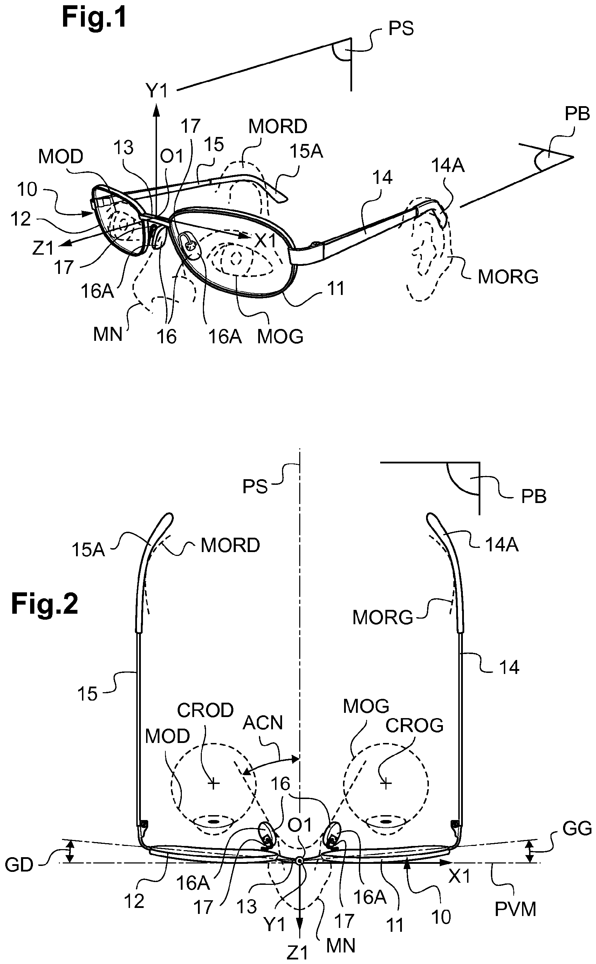

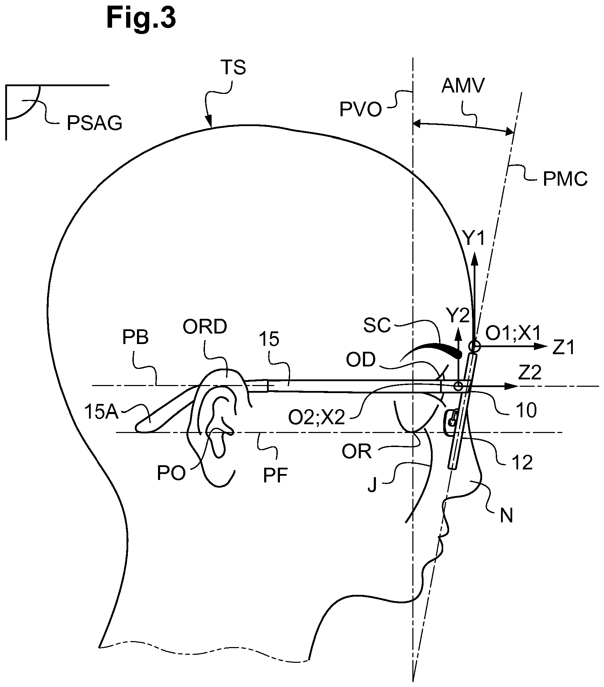

- Par « **géométrie de la monture** », on entend les dimensions de cette monture, par exemple le diamètre des cercles et/ou leur forme, la longueur des branches ou la longueur du pontet, ainsi que les angles caractéristiques de cette monture de référence, notamment l'angle de galbe GD, GG et l'angle pantoscopique AMV (figures 2 et 3).
- Par « **forme de monture** », on entend une catégorie de monture présentant une caractéristique géométrique commune déterminant au moins partiellement la forme globale, donc la structure de la monture. La forme de la monture peut alors être associée à un identifiant de cette monture.

Les formes de montures peuvent par exemple être classées selon les catégories de montures suivantes :

- catégories liées à la forme de chaque cercle de la monture, par exemple, cercles circulaires, ovales, rectangulaires, carrées ou autres,
- catégories liées à la forme globale des cercles de la monture, par exemple liées à la base de la monture, qui peut être faible, forte ou moyenne en fonction de valeurs seuils prédéfinies,
- catégories liées à la forme des branches de la monture : droites ou courbées à leur extrémité libre.

L'invention concerne un procédé de fabrication d'une monture personnalisée à partir d'une définition géométrique d'un équipement optique personnalisé adapté à son porteur, comprenant au moins une définition géométrique d'une monture personnalisée de cet équipement personnalisé, la monture personnalisée étant destinée à accueillir des lentilles ophtalmiques personnalisées de correction visuelle et une définition géométrique d'au moins une desdites lentilles ophtalmiques personnalisées destinées à être montée dans ladite monture personnalisée, selon lequel :

- on identifie une monture de référence choisie par le porteur,
- on détermine la valeur d'au moins un paramètre géométrique de personnalisation $P_{perso}$ de la monture personnalisée :

    à partir de l'acquisition de données relatives à au moins une grandeur morphologique de la tête TS du porteur,
    de telle sorte que la monture personnalisée soit ajustée conformément à au moins un critère d'ajustage de personnalisation de la géométrie de la monture personnalisée par rapport à la grandeur morphologique de la tête TS du porteur, comprenant une contrainte sur au moins un paramètre géométrico-morphologique lié à la position relative de ladite monture personnalisée par rapport à la tête du porteur,

- on détermine la définition géométrique de ladite monture personnalisée en fonction dudit au moins un paramètre géométrique de personnalisation $P_{perso}$ de la monture personnalisée et de la monture de référence 10 choisie par le porteur en déformant une définition géométrique de la monture de référence pour que la définition géométrique de la monture personnalisée, résultant de cette déformation, soit conforme audit paramètre géométrique de personnalisation $P_{perso}$, avec un ajustage sur la tête TS du porteur conforme audit critère d'ajustage de personnalisation, sans contrainte de conservation d'au moins l'une des dimensions suivantes de la monture de référence : le périmètre des cercles, , la courbure de contour de la monture de référence et
- on détermine la définition géométrique des lentilles ophtalmiques personnalisées conjointement avec la définition géométrique de la monture personnalisée, simultanément à celle-ci, et
- on fabrique ladite monture personnalisée conforme à ladite définition géométrique déterminée.

Le procédé selon l'invention comporte une définition géométrique d'au moins une lentille ophtalmique personnalisée destinée à être montée dans ladite monture personnalisée.

La définition géométrique des lentilles ophtalmiques personnalisées et de la monture personnalisée est déterminée conjointement, de manière globale.

Par conjointement, on entend que la définition géométrique des lentilles ophtalmiques personnalisées est déterminée simultanément à la détermination de la définition géométrique de la monture.

La définition géométrique des lentilles ophtalmiques personnalisées prend, ainsi, en compte des contraintes géométriques et/ou de confort du porteur et/ou des critères esthétiques souhaités par le porteur, comme cela est décrit plus loin.

La conception optique de ces lentilles ophtalmiques personnalisées est réalisée en fonction de paramètres optiques issus des besoins en termes de correction visuelle du porteur, de paramètres morphologiques fonction de la morphologie de la tête du porteur et, selon la variante de réalisation, le cas échéant, de paramètres géométriques fonction de la géométrie de la monture personnalisée.

De plus, le procédé permettant de définir les conditions de port de l'équipement personnalisé, c'est-à-dire le positionnement de cet équipement après ajustage sur la tête du porteur, ces conditions de port peuvent également être utilisées pour la conception optique des lentilles ophtalmiques personnalisées.

La détermination de la définition géométrique de la monture personnalisée prend ainsi en compte des paramètres liés aux lentilles ophtalmiques personnalisées destinées à être montées sur cette monture, comme expliqué plus loin.

La description qui suit comporte des variantes non couvertes par les revendications, et donc non comprises dans l'invention, qui sont conservées de manière à conserver la cohérence de l'ensemble de la description. Ces variantes sont clairement signalées par la mention « non comprise dans l'invention ».

Détermination de la monture de référence 10 (étape 100 de la figure 7 notamment).

Dans les exemples décrits ici, on utilise une monture de référence 10. Cette monture de référence 10 est standard et non personnalisée.

Une première étape du procédé selon l'invention consiste donc à identifier une monture de référence 10. Il s'agit d'une étape de sélection de la monture de référence 10 par le porteur.

Cette monture de référence 10 peut être notamment choisie par le porteur parmi un ensemble de montures de référence 10 qui lui sont proposées. Celui-ci peut choisir en fonction de critères esthétiques, pratiques (utilisation de la monture, robustesse, etc....), économiques (prix...), et/ou de confort.

Dans une variante de réalisation, il peut également tenir compte de critères liés à la correction visuelle devant être apportée par les lentilles ophtalmiques destinées à être montées dans la monture personnalisée. Cette correction visuelle peut par exemple imposer que les cercles de la monture soient suffisamment grands, par exemple pour des lentilles progressives, ou que le galbe de la monture ne soit pas trop fort, par exemple pour des lentilles correctrices de la myopie.

Sur les figures 1 à 4, on a représenté un exemple de monture de référence 10 de lunettes choisie par le porteur. Dans l'exemple illustré, la monture de référence 10 est de type cerclé, c'est-à-dire que la monture de référence 10 comporte des cercles 11, 12 dans lesquels les lentilles ophtalmiques sont destinées à être montées.

Ces deux cercles 11, 12 sont reliés de manière rigide par un pont nasal 13. Chaque cercle 11, 12 est également relié à une branche 14, 15, habituellement articulée sur le cercle correspondant.

On considérera dans la suite que les branches sont fixes, dans leur position ouverte l'une par rapport à l'autre.

Le pont nasal 13 comporte des éléments d'appui nasal. Ces éléments d'appui comprennent notamment deux surfaces d'appui 16 sur les ailes du nez du porteur (figure 1). Ces surfaces d'appui 16 peuvent être fixes, par exemple dans le cas d'une monture de référence en plastique dans laquelle les éléments d'appui nasal et donc ces surfaces sont intégrées aux cercles de la monture, ou être réglables, par exemple dans le cas d'une monture de référence métallique dans laquelle les éléments d'appui nasal se présentent sous la forme de deux plaquettes 16A chacune reliée au pont nasal par un bras 17 (figures 1 et 2). C'est ce dernier cas qui est représenté sur les figures.

Les plaquettes 16A peuvent aussi être reliées aux cercles 11, 12 de la monture 10.

Les plaquettes 16A portant les surfaces d'appui 16 de la monture de référence 10 sur le nez du porteur présentent principalement deux paramètres réglables: d'une part la distance de la plaquette 16A au cercle 11, 12 de la monture 10 et d'autre part l'inclinaison de la plaquette 16A suivant un angle de face et un angle de chasse définis ultérieurement.

Dans le cas des montures plastiques décrit précédemment, la position et l'inclinaison des surfaces d'appui de la monture sur le nez du porteur sont prédéterminées et fixes.

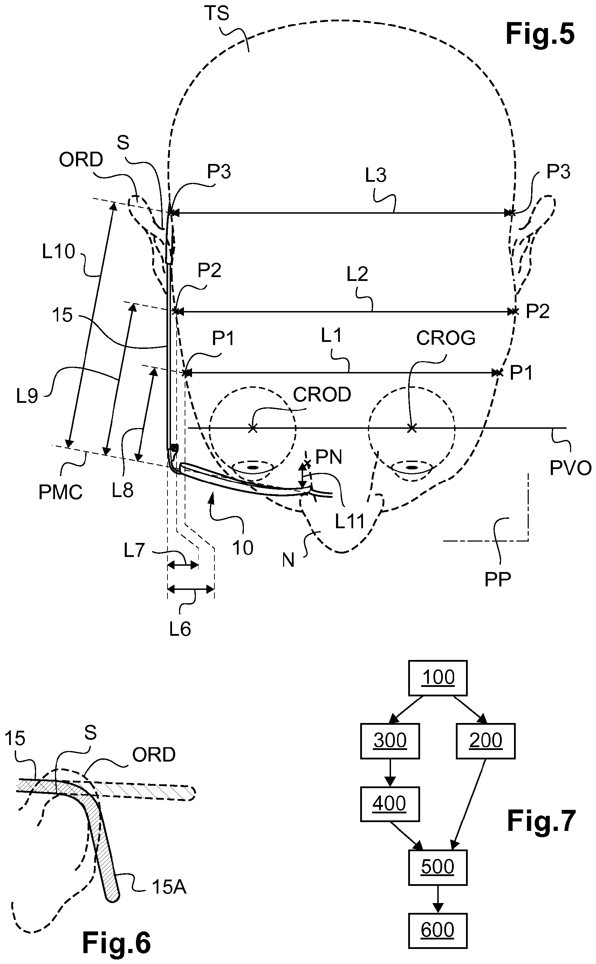

Chaque branche 14, 15 de la monture de référence 10 comprend au moins une première partie dont l'extrémité est reliée au cercle 11, 12 correspondant. Cette première partie peut être droite (figure 5) ou présenter une légère courbure lui permettant d'épouser le contour de la tête TS du porteur.

Sur l'exemple représenté sur les figures, chaque branche 14, 15 de la monture de référence 10 comporte en outre une deuxième partie sous la forme d'une spatule 14A, 15A prolongeant la première partie de la branche 14, 15 à l'extrémité opposée aux cercles 11, 12 de la monture 10.

Cette spatule 14A, 15A forme l'extrémité recourbée de la branche 14, 15 correspondante. Elle est destinée à venir se placer derrière l'oreille ORD, ORG correspondante du porteur (voir figure 6).

En variante, les branches de la monture de référence 10 ne comportent pas de spatules. Dans ce cas, c'est l'extrémité libre de la première partie de la branche qui repose sur l'oreille du porteur. Cette variante est représentée en pointillé sur la figure 6.

En variante encore, la monture de référence 10 peut être de type percé, c'est-à-dire que les lentilles ophtalmiques sont percées et maintenues chacune par une extrémité du pont nasal et une extrémité de la branche associée à la lentille, qui coopèrent avec des trous de perçage. Ce type de monture est similaire à celui décrit précédemment, sauf qu'il ne comporte pas de cercles. Le pont nasal et les branches sont similaires. En pratique, pour une telle monture percée, le contour des lentilles ophtalmiques joue alors le rôle des cercles d'une monture de type cerclée.

De manière générale, la monture de référence 10 présente un plan de symétrie PS passant par le milieu du pont nasal 13 et équidistant des branches 14, 15 de la monture 10.

En outre, la première partie des deux branches 14, 15 s'étend dans un même plan moyen PB.

Comme représenté sur les figures 1 et 2, on définit un premier référentiel associé à la monture de référence 10, c'est-à-dire dans lequel la monture de référence 10 présente une position et une orientation fixe, ayant un repère orthonormé (O1, X1, Y1, Z1). Le centre O1 du repère de ce premier référentiel est, par exemple, le milieu du pont nasal 13. L'axe O1Z1 est parallèle à l'intersection du plan de symétrie PS de la monture 10 et du plan moyen PB des branches 14, 15. L'axe O1Y1 s'étend dans le plan de symétrie PS de la monture de référence 10, dans la direction opposée aux cercles de la monture. L'axe O1X1 s'étend parallèlement au plan moyen des branches PB. Le plan O1Y1Z1 correspond alors au plan de symétrie PS de la monture de référence 10. Le plan O1X1Z1 est parallèle au plan moyen des branches PB. Le plan O1X1Y1 est appelé plan vertical monture PVM.

L'angle de chasse de chaque plaquette 16A correspond à l'inclinaison de la surface de contact de la plaquette 16A par rapport au plan O1Y1Z1 de la monture 10, mesuré en projection dans le plan O1X1Z1.

L'angle de face de chaque plaquette 16A correspondant à l'inclinaison de la surface de contact de la plaquette 16A par rapport au plan O1Y1Z1, mesuré en projection dans le plan O1X1Y1.

De manière générale, la monture de référence 10 peut être une monture réelle ou virtuelle.

Selon un premier mode de réalisation, la monture de référence 10 est virtuelle, le porteur peut par exemple la choisir sur catalogue ou en ligne par exemple. Cette monture de référence 10 virtuelle est associée à un modèle en trois dimensions ou à un ensemble de mesures de longueurs et d'angles caractéristiques de cette monture de référence 10 ou encore aux coordonnées dans un même référentiel d'un ensemble de points particuliers de la monture de référence 10.

La monture de référence 10 virtuelle peut également être déterminée en réalisant une modélisation au moins partielle d'une monture de référence réelle.

Selon un second mode de réalisation, la monture de référence 10 est réelle. Elle est par exemple choisie en magasin par le porteur.

La monture de référence 10 peut comprendre des lentilles de présentation non correctrices ou aucune lentille.

Détermination du paramètre géométrique de personnalisation de la monture

La monture de référence 10 étant identifiée, la prochaine étape est la détermination du paramètre géométrique de personnalisation de cette monture.

Le paramètre géométrique de personnalisation peut être déterminé de différentes manières. Deux modes de réalisation sont envisagés par la suite, selon que la monture de référence 10 est virtuelle ou réelle.

Selon un premier mode de réalisation dans lequel la monture de référence 10 est virtuelle, la détermination d'une valeur dudit paramètre géométrique de personnalisation est réalisée en fonction d'une modélisation de la tête du porteur et d'un ajustage virtuel de cette modélisation de la monture de référence 10 sur la modélisation de la tête du porteur.

Plus particulièrement, la détermination du paramètre géométrique de personnalisation comporte alors par exemple les étapes suivantes :

a1) déterminer la monture de référence 10 virtuelle, comprenant par exemple la modélisation d'une monture de référence 10 réelle, avec, dans ledit premier référentiel (O1, X1, Y1, Z1), au moins un modèle des éléments d'appui nasal de la monture de référence 10 et un modèle d'une partie des branches 14, 15 de la monture de référence 10,

b1) déterminer une modélisation au moins partielle de la tête TS du porteur, avec, dans un même référentiel, au moins un modèle d'une partie du nez N, un modèle d'une partie des oreilles ORD et ORG,

c1) effectuer une simulation du positionnement de la monture de référence 10 sur la tête TS du porteur, en superposant, sur la modélisation de la tête TS du porteur, les zones correspondantes de la modélisation de ladite monture de référence 10,

d1) dans la configuration de l'étape c1), déterminer la valeur d'au moins un paramètre géométrico-morphologique de référence $PGM_{réf}$ lié à la position relative de ladite monture de référence 10 par rapport à la tête TS du porteur ;

e1) déterminer, à partir de cette superposition, la valeur du paramètre géométrique de personnalisation de la monture personnalisée.

*Etape a1)*

Il s'agit dans cette étape de récupérer les données de la monture de référence 10 sélectionnée à l'étape précédente.

Cette monture de référence 10 virtuelle peut être définie par exemple par un ensemble de longueurs et d'angles caractéristiques de la monture.

Elle peut comprendre, également, un modèle des cercles de la monture ou du contour des lentilles ophtalmiques montées sur la monture 10.

Ces longueurs et angles caractéristiques comportent par exemple, pour le modèle d'une partie des branches : la longueur de la première partie des branches 14, 15, la longueur des spatules 14A, 15A, l'écart entre les branches 14, 15, l'angle entre la spatule 14A, 15A et la première partie de la branche 14, 15 correspondante dans le plan O1Y1Z1 et dans le plan O1X1Z1.

Elles comportent par exemple, pour le modèle des éléments d'appui nasal : l'écart entre les surfaces d'appui 16 du pont 13 sur le nez, l'angle formé entre des surfaces d'appui 16 et la distance de ces surfaces d'appui aux cercles de la monture 10.

Elles comportent par exemple, pour le modèle des cercles 11, 12 : le diamètre de chaque cercle 11, 12 dans le plan O1,X1,Z1, la mesure du galbe GD, GG, correspondant à l'angle formé entre chaque cercle 11, 12 et le plan O1X1Y1 ou plan vertical monture PVM (figure 2), et la position des points les plus hauts et les plus bas des cercles 11, 12 dans le plan O1Y1Z1.

Plus spécifiquement, pour le modèle des cercles 11,12 le paramètre géométrique de la forme peut être retranscrit dans une collections de points Pi de coordonnées (Xi, Yi, Zi) représentatifs de la trajectoire de la rainure du cercle 11,12 correspondant, ou du contour de la lentille elle-même lorsqu'il s'agit d'une monture percée ou rainurée. Ces données sont, par exemple, établies via un dispositif commercial de type lecteur de forme, décrit par exemple dans le document US5121548.

Concernant l'angle de galbe, certains dispositifs commerciaux sont capables de mesurer cet angle lors de l'acquisition de la forme de la monture.

Une autre méthode de détermination de cet angle est une technique de mesure directe de la monture de référence 10 sur un patron gradué. Elle consiste à positionner la monture de référence 10 au dessus d'un motif standard modélisant différentes valeurs d'angles de galbe. La valeur est obtenue par lecture directe quand la monture de référence 10 est bien positionnée.

A partir de ces caractéristiques de longueurs et d'angles, il est possible de reconstituer une modélisation de la monture de référence 10. Cette reconstitution peut tenir compte d'autres paramètres, tel que le matériau de la monture ou l'épaisseur des branches et des cercles.

La modélisation de la monture de référence 10 peut également être constituée par la donnée de la position dans le premier référentiel (O1, X1, Y1, Z1) d'un certain nombre de points particuliers de la monture de référence 10.

Cette modélisation ou monture de référence 10 virtuelle peut enfin être le résultat d'une acquisition d'image en trois dimensions de la monture de référence 10 réelle. Cette acquisition peut être faite par exemple à l'aide d'un dispositif d'acquisition d'image stéréoscopique ou à l'aide d'un scanner en trois dimensions.

Quelle que soit la méthode d'obtention de la monture de référence 10 virtuelle, celle-ci est mise en mémoire dans les moyens informatiques et électroniques précités. Il est ainsi possible de disposer, dans cette mémoire, d'une base de données comportant les modélisations d'un ensemble de montures de référence 10 disponibles, qui sont déterminées à l'avance.

Ces étapes de détermination de la monture de référence 10 virtuelle sont mises en oeuvre par des moyens informatiques et électroniques programmés à cet effet.

*Etape b1)*

La modélisation de la tête TS du porteur est déterminée soit en temps réel de manière à réaliser un essayage virtuel de la monture de référence 10 sur la tête TS du porteur, soit dans une étape préliminaire optionnelle.

La modélisation en temps réel de la tête TS du porteur fait l'objet de préférence d'un affichage en temps réel.

Que la détermination de la modélisation de la tête TS du porteur soit faite en temps réel ou dans une étape préliminaire, elle peut être réalisée soit par le choix, dans une base de données, d'une modélisation générique, soit par détermination d'une modélisation spécifique de la tête TS du porteur.

Dans le cas de la détermination d'une modélisation générique de la tête TS du porteur, on choisit la modélisation de la tête TS du porteur parmi un groupe de modélisation prédéterminée en fonction de critères de choix tels que le sexe, l'âge, la catégorie ethnique, ou une mesure simplifiée comme la taille du périmètre crânien du porteur.

Il peut s'agir par exemple d'une modélisation générique adaptée à un porteur de type caucasien ou asiatique, à un enfant en fonction de son âge, etc....

Dans le cas de la détermination d'une modélisation spécifique de la tête du porteur, l'étape comporte la sous-étape suivante :

- déterminer une modélisation numérique au moins partielle de la tête TS du porteur, avec, dans un premier référentiel commun, au moins un modèle MN d'une partie du nez N, un modèle MORD, MORG d'une partie des oreilles ORD, ORG (figure 1).

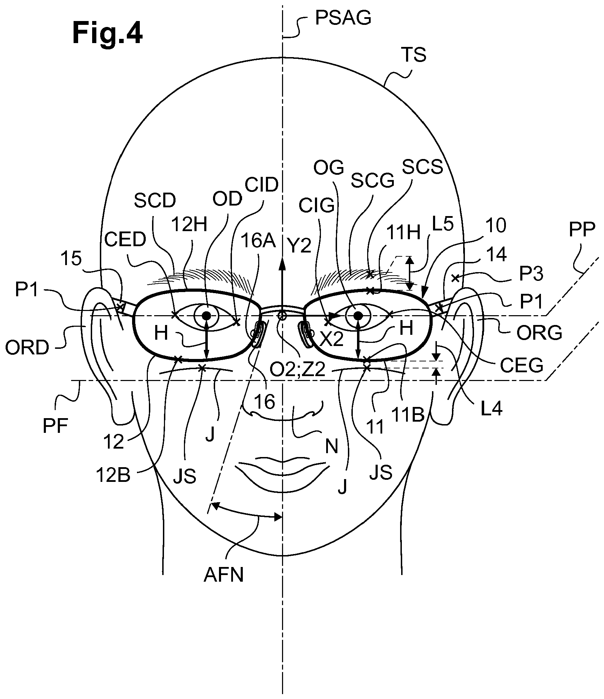

Dans une variante de réalisation, la modélisation numérique comprend, en outre, au moins un modèle d'une partie de la zone médiane du visage comprenant les sourcils SCD, SCG, les joues J, et les tempes, cette dernière partie peut être assimilée à la zone illustrée figure 4 et comprise entre un plan de Francfort PF défini ci-dessous et les sourcils SCD, SCG du porteur.

Comme représenté sur la figure 3, on définit un deuxième référentiel associé à la tête TS du porteur, c'est-à-dire dans lequel la tête TS du porteur présente une position et une orientation fixe, ayant un repère orthonormé (O2, X2, Y2, Z2).

Le plan de Francfort PF de la tête TS du porteur est défini comme le plan passant par les points orbitaires inférieurs OR et le porion PO du porteur, le porion étant le point du crâne le plus élevé du conduit auditif, qui correspond au tragion de l'oreille (figure 3).

On considère que le porteur est dans une position orthostatique, position dans laquelle il réalise un minimum d'efforts. L'axe de regard du porteur est l'axe de regard primaire, c'est-à-dire qu'il regarde droit devant lui. Le plan de Francfort PF est alors horizontal.

On définit un plan sagittal PSAG de la tête TS du porteur comme étant le plan vertical passant par la médiatrice AO des deux yeux OG, OD. La médiatrice AO des yeux est l'axe passant au milieu du segment défini par les centres de rotation des deux yeux et parallèle au plan de Francfort PF.

On définit l'angle pantoscopique AMV comme l'angle entre le plan moyen de chaque cercle PMC de la monture 10 et le plan vertical oeil PVO, qui est le plan perpendiculaire à l'axe du regard en position orthostatique.

De préférence, le plan vertical oeil PVO correspond également au plan perpendiculaire au plan de Francfort passant par les centres de rotation CROG, CROD des yeux, mesuré en projection dans le plan sagittal de la tête TS du porteur.

Le centre O2 du repère de ce deuxième référentiel est, par exemple, le milieu du segment reliant les centres de rotation des yeux OD, OG du porteur.

L'axe O2Z2 est situé dans le plan sagittal PSAG de la tête TS du porteur et est parallèle au plan de Francfort PF. Il s'étend dans une direction s'éloignant de la tête du porteur. L'axe O2Y2 s'étend dans le plan sagittal PSAG de la tête TS du porteur et est perpendiculaire au plan de Francfort PF. L'axe O2X2 s'étend parallèlement au plan de Francfort PF. En variante, tout autre référentiel de la monture et/ou de la tête du porteur peut être envisagé.

La modélisation de la tête du porteur comprend par exemple, dans ledit deuxième référentiel (O2, X2, Y2, Z2), au moins un modèle MN d'une partie du nez N et un modèle MORD, MORG d'une partie des oreilles ORD, ORG du porteur.

On détermine en outre de préférence un modèle MOD, MOG d'une partie des yeux du porteur.

Ces modèles sont représentés schématiquement sur les figures 1 et 2 par des pointillés.

Le modèle MN d'une partie du nez comporte par exemple de préférence la largeur de la racine du nez N, l'angle de face AFN (figure 4) du nez, l'angle de chasse ACN du nez (figure 2).

Le modèle MORD, MORG d'une partie de chaque oreille du porteur comporte les coordonnées d'une surface courbe correspondant au sillon S situé entre le pavillon de l'oreille ORD, ORG et le crâne du porteur, à l'arrière de l'oreille (figures 5 et 6). C'est en effet sur ce sillon S que repose la branche 14, 15 correspondante de la monture 10 de lunettes.

Le modèle MOD, MOG des yeux du porteur comporte par exemple la position dans le deuxième référentiel (O2, X2, Y2, Z2) du centre de rotation CROD, CROG de chaque oeil. Il peut également comprendre un diamètre de l'œil : le modèle de l'oeil est alors constitué d'une sphère de ce diamètre centrée sur le centre de rotation de l'oeil (figure 2). On détermine également, de préférence, un modèle d'une partie des pommettes J et/ou des sourcils SCD, SCG (figures 3 et 4) de la tête du porteur.

Cette modélisation est de préférence le résultat d'une acquisition d'image en trois dimensions de la tête TS du porteur. Cette acquisition peut être faite par exemple à l'aide d'un dispositif d'acquisition d'image stéréoscopique ou à l'aide d'un scanner en trois dimensions, utilisant par exemple une lumière structurée.

L'acquisition d'images en trois dimensions est réalisée de préférence pour la tête TS du porteur de face (figure 4), de profil (figure 3) et le tour des oreilles. Elle est de préférence d'une précision de 2 degrés d'angle et de deux millimètres sur les distances.

Elle peut être réalisée par un opérateur extérieur, par exemple par l'opticien dans son magasin. On peut également envisager qu'elle soit réalisée à distance, par exemple par le porteur lui-même chez lui, puis transmise à l'opérateur chargé de la détermination de la monture personnalisée.

La modélisation de la tête TS du porteur peut également être réalisée par une capture d'une ou plusieurs images en deux dimensions de la tête TS du porteur.

Quel que soit le dispositif de capture d'image utilisé, 2D ou 3D, on enregistre en correspondance avec les images capturées une information indiquant l'échelle de l'image capturée. Il peut s'agir de l'image d'un indicateur d'échelle disposé sur la tête TS du porteur, par exemple un élément comportant un motif de dimensions connues, rapporté sur la tête TS ou sur une monture de lunettes du porteur ou l'écart inter-pupillaire connu du porteur.

Cette information peut également être fournie par le dispositif de capture d'image ou reçue par celui-ci.

Enfin la modélisation de la tête TS du porteur peut également être constituée d'un ensemble de mesures effectuées directement par l'opticien sur la tête TS du porteur, par exemple à l'aide d'un réglet.

De manière générale, la position relative des points suivants de la tête TS du porteur peut être déterminée :

- centre des pupilles,
- cantus de l'œil,
- points sphénoïde et temporal.

Les paramètres géométriques suivants de la tête TS du porteur peuvent être déterminés :

- hauteur des sourcils, forme des sourcils,
- hauteur des pommettes,
- forme du nez au niveau des cantus,
- pente latérale du nez,
- courbe horizontale/verticale moyenne du visage, ou sur un méridien précis,
- forme globale de la tête TS du porteur, par exemple selon l'une des classifications existantes, selon Sigaud, Hoffman, ou Eber,
- port de tête, inclinaison naturelle à gauche ou droite.

Dans le cas où la modélisation de la tête TS du porteur est réalisée à partir d'une ou plusieurs captures d'image, l'identification de ces points et la détermination de ces mesures ou traits du visage du porteur pourra être automatisée via un logiciel de traitement de l'image (reconnaissance faciale) ou semi automatique via une interface où un certain nombre de points doivent être sélectionnés par l'utilisateur, en pratique l'opticien. Cette modélisation spécifique de la tête TS du porteur est également mise en mémoire dans les moyens informatiques et électroniques.

*Etape c1)*

Il s'agit alors de superposer par calcul la modélisation de la monture de référence 10 et de la modélisation de la tête TS du porteur.

Plus précisément, on superpose d'une part, le modèle d'une partie du pont 13 de la monture de référence 10 et le modèle MN d'une partie du nez N du porteur, et, d'autre part, le modèle d'une partie des branches 14, 15 de la monture de référence 10 et le modèle MORD, MORG d'une partie des oreilles ORD, ORG du porteur.

Ce faisant, on réalise un positionnement de référence de la monture de référence 10 sur la tête TS du porteur. On effectue dans cette étape un ajustage grossier de la monture de référence 10 sur la tête TS du porteur.

Plus particulièrement, on s'assure simplement de l'horizontalité de la monture de référence 10 sur la tête TS du porteur. Dans ce cadre, l'exemple qui suit donne une méthode de réalisation possible de la superposition numérique des deux modélisations avec positionnement de la monture de référence 10 sur la tête du porteur.

On considère initialement que les premier et deuxième référentiels (O1, X1, Y1, Z1) et (O2, X2, Y2, Z2) de la monture de référence 10 et de la tête sont confondus, puis on optimise leur positionnement relatif, en maintenant l'axe O1X1 parallèle à l'axe O2X2. L'horizontalité de la monture sur la tête du porteur est ainsi assurée.

*Etape d1)*

Le positionnement de l'étape c1) est réalisé par calcul. A partir des données en mémoire, les moyens informatiques et électroniques sont alors programmés pour déterminer par calcul les valeurs des paramètres géométrico-morphologique de référence $PGM_{réf}$ recherchés à partir de la superposition des modélisations de la tête TS du porteur et de la monture de référence 10 virtuelle déterminée précédemment à l'étape c1).

Quel que soit le mode de réalisation envisagé pour réaliser cette étape d1), en pratique le paramètre géométrico-morphologique de référence $PGM_{réf}$ recherché dépend à la fois de la géométrie de la monture de référence 10 et de la morphologie de la tête TS du porteur.

Par morphologie de la tête TS du porteur, on entend notamment les dimensions de la tête du porteur, la position des yeux, des pommettes, des sourcils ou du nez sur la tête du porteur, la forme des sourcils et du nez.

Les dimensions de la tête TS du porteur comprennent notamment des mesures de la largeur L1, L2, L3 de la tête TS mesurée comme la distance entre deux points P1, P2, P3 situés de part et d'autre de la tête, à l'intersection avec un plan PP parallèle au plan de Francfort PF et passant par les canthus internes CID, CIG ou externes CED, CEG des yeux (voir figure 4).

On définit notamment les points sphénoïdes P1, temporaux P2, et supéroauriculaires P3 de la tête du porteur (voir figures 4 et 5).

Les points sphénoïdes P1 sont situés de part et d'autre de la tête TS du porteur, au niveau de l'os sphénoïde du crâne. On considère deux points situés sur une ligne horizontale, c'est-à-dire parallèle au plan de Francfort PF et parallèle au plan vertical oeil PVO. Le couple de points sphénoïdes considérés correspondra, pour la mise en oeuvre du procédé, au couple de points séparés par une distance minimale. Les points temporaux sont situés de part et d'autre de la tête du porteur, au niveau de l'os temporal du crâne. On considère deux points situés sur une ligne horizontale, c'est-à-dire parallèle au plan de Francfort et parallèle au plan vertical oeil PVO. Le couple de points temporaux considérés correspondra, pour la mise en oeuvre du procédé, au couple de points séparés par une distance minimale. Ces points sphénoïdes et temporaux sont, par exemple, définis dans le document ayant pour titre «L'opticien lunetier» de Caroline Kovarki édité par Lavoisier Edition TEC & DOC, en 2009, ISBN 978-2-7430-1088-1, 2ème édition au Chapitre 33 - prise de mesure aux pages 1473 et suivantes.

Les points supéroauriculaires sont situés de part et d'autre de la tête du porteur, en correspondance avec le point le plus élevé du sillon de l'oreille. L'écart supérieur auriculaire correspondant à la distance entre ces deux points supéroauriculaires est l'écart entre les sillons S des oreilles droites ORD et gauches ORG.

Plus précisément, ledit au moins un paramètre géométrico-morphologique de référence $PGM_{réf}$ déterminé à l'étape d1) comporte par exemple l'une des grandeurs géométriques suivantes :

- une position relative des branches de la monture de référence 10 par rapport aux oreilles ORD, ORG du porteur,
- un écartement des branches 14, 15 de la monture de référence 10 associé à un écart déterminé entre les oreilles ORD, ORG,
- une évaluation de la surface de contact entre les éléments d'appui nasal 16A de la monture de référence 10 et le nez N du porteur,
- une position relative des cercles 11, 12 de la monture de référence 10 et des yeux OD, OG du porteur,
- une position relative du contour des lentilles ophtalmiques montées sur la monture de référence 10 et des yeux OD, OG du porteur,
- une distance entre au moins un point singulier de la monture de référence 10 et un point singulier de la tête du porteur,
- une distance entre au moins un point singulier du contour des lentilles ophtalmiques montées sur la monture de référence 10 et un point de la tête TS du porteur,
- un angle entre une droite reliant les points saillants de la pommette JS et de l'arcade sourcilière SCS et le plan moyen du cercle PMC de la monture de référence disposé en regard, mesuré dans un plan perpendiculaire audit plan moyen du cercle de la monture de référence,
- un angle entre une droite reliant le point sphénoïde P1 et un point PN de l'aile du nez du porteur et le plan moyen du cercle PMC correspondant de la monture de référence, mesuré dans un plan parallèle au plan de Francfort PF de la tête TS du porteur.

En particulier, ledit au moins un paramètre géométrico-morphologique de référence $PGM_{réf}$ de l'étape d1) comporte de préférence une distance entre au moins un point singulier de la monture de référence et un point singulier de la tête du porteur, parmi les distances suivantes :

- distance entre un point des cercles de la monture de référence 10 et un point des pommettes du porteur, par exemple la distance L4 entre le point le plus bas 11B, 12B du cercle 11, 12 de la monture de référence 10 et le point le plus saillant JS de la pommette J correspondante du porteur, mesurée en projection dans un plan parallèle au plan de Francfort de la tête du porteur (figure 4),
- distance entre un point des cercles de la monture de référence 10 et un point des sourcils SCD, SCG du porteur, par exemple la distance L5 entre le point le plus haut 11H, 12H du cercle 11, 12 de la monture de référence et le point le plus saillant SCS du sourcil SCD, SCG ou de l'arcade sourcilière SC correspondante du porteur, mesurée en projection dans un plan parallèle au plan de Francfort de la tête du porteur (figure 4),

- distance entre un point des yeux du porteur et un point associé à la monture de référence 10, par exemple la distance entre l'un des canthus CI, CE de l'œil ORD, ORG et le plan moyen PMC du cercle de la monture de référence correspondant,
- distance L6, L7 entre chaque point sphénoïde P1, temporal P2 et/ou supéroauriculaire P3 et la branche 14, 15 correspondante de la monture de référence 10 (figure 5),
- distance L8, L9, L10 entre chaque point sphénoïde P1, temporal P2 et/ou supéroauriculaire P3 et le plan moyen du cercle PMC de la monture de référence 10 correspondant (figure 5),
- distance L11 entre un point de l'aile du nez PN et le point le plus proche du cercle 11, 12 de la monture de référence 10, le point de l'aile du nez étant par exemple un point de l'aile du nez appartenant à un plan parallèle au plan de Francfort et passant par les canthus internes ou externes des yeux du porteur.

On peut également prendre en compte les distances entre chaque point sphénoïde P1, temporal P2 et/ou supéroauriculaire P3 et le plan vertical monture PVM de la monture de référence 10.

En particulier, ledit au moins un paramètre géométrico-morphologique de référence $PGM_{réf}$ de l'étape d1) est constitué d'une collection de distances entre les points de la monture de référence 10 et un ou des points singuliers de la tête TS du porteur. Les points servant à la construction de cette collection de distances peuvent être choisis par un échantillonnage équidistant sur une partie des cercles de la monture de référence 10 ou leur totalité. Ces points sont par exemple ceux issus du lecteur de forme. Les distances formant la collection sont alors appréciées entre le point lui-même et sa projection sur le visage selon l'axe O1Z1.

*Etape e1)*

A l'étape e1), on détermine au moins une valeur d'au moins un paramètre géométrique de personnalisation $P_{perso}$ de ladite monture personnalisée à partir de la valeur du paramètre géométrico-morphologique de référence $PGM_{réf}$ déterminé à l'étape d1).

Plus précisément, la valeur dudit paramètre géométrique de personnalisation $P_{perso}$ est déterminée de telle sorte que la monture personnalisée soit ajustée sur la tête du porteur conformément à au moins un critère d'ajustage de personnalisation comprenant une contrainte sur au moins un paramètre géométrico-morphologique lié à la position relative de ladite monture personnalisée par rapport à la tête TS du porteur.

Ce critère d'ajustage de personnalisation est prédéterminé.

En d'autres termes, le paramètre géométrique de personnalisation $P_{perso}$ est déterminé en fonction des valeurs du paramètre géométrico-morphologique de référence $PGM_{réf}$ déterminé à l'étape d1) pour la monture de référence 10 positionnée sur la tête du porteur, de manière à ce que le paramètre géométrico-morphologique lié à la position relative de la ladite monture personnalisée par rapport à la tête TS du porteur satisfasse un critère d'ajustage de personnalisation.

Dans un exemple non limitatif, la personnalisation de l'équipement se fait via un paramètre géométrique de personnalisation $P_{perso}$ qui est l'angle de galbe de la monture.

De façon plus détaillée, on définit deux paramètres géométriques de de personnalisation qui sont l'angle de galbe gauche GG pour le côté gauche de la monture et l'angle de galbe droit GD pour le côté droit de la monture.

Il est à noter que la détermination de ces paramètres en particulier implique la prise en compte de la prescription du porteur et un positionnement de la lentille ophtalmique devant l'oeil compatible avec la correction optique à réaliser. En effet, à l'étape du montage, la géométrie de la lentille ophtalmique, liée à la prescription demandée, aura un effet sur l'angle de galbe de la monture personnalisée. Plus la lentille aura une face avant plate plus l'angle de galbe résultant sera faible, ce qui est incompatible avec une protection efficace car dans ce cas la lentille aura pour effet de s'écarter du visage côté temporal.

Dans une étape préalable, on détermine donc les paramètres optiques de la lentille tels que les courbures de ses faces. La courbure de la face avant est alors évaluée sur une zone de la lentille correspondant à la forme de la monture de référence.

Le critère d'ajustage de personnalisation utilisé comprend ici une contrainte sur le paramètre géométrico-morphologique de distance entre un point singulier des cercles 11 et 12 de la monture personnalisée et un point singulier de la tête TS du porteur.

En pratique, on modélise en particulier la zone médiane du visage à l'étape b1) puis on effectue le positionnement selon c1).

On utilise alors selon d1) un critère d'ajustage de personnalisation sur le paramètre géométrico-morphologique de distance entre un point singulier du cercle gauche 11 (respectivement du cercle droit 12) de la monture personnalisée et un point singulier de la tête TS du porteur. Ce critère d'ajustement de personnalisation est ici la distance De entre le point extrême Pe de la forme côté temporal situé sur la ligne médiane horizontale et le point P'e du visage. Le point Pe est le point du cercle dont la coordonnée Xe selon O1X1 est mimimale ou maximale (côté temporal droit Xe est minimum, côté temporal gauche Xe est maximal). La ligne médiane horizontale étant la ligne qui coupe la forme des cercles en deux parties de hauteurs égales lorsque la forme est vue de face. P'e est déterminé par la projection sur le visage du point Pe selon un axe fixe, par exemple l'axe O1Z1. Cette distance est utilisée en tant que distance cible. Dans un exemple non limitatif, le critère d'ajustage est que cette distance soit égale à 15 millimètres +/- 5 millimètres. La monture personnalisée obtenue présente une géométrie telle que le point Pe se situe à une distance de 15 millimètres +/- 5 millimètres du point P'e.

La valeur du paramètre géométrique de personnalisation $P_{perso}$ déterminée à l'étape e1) est ici la valeur de l'angle de galbe personnalisée GG' (respectivement GD'). En effet lorsque l'on fait varier le galbe de la monture on modifie la distance De.

Ce paramètre est établi en fonction de la distance De relative à la position du point Pe incluant la lentille ophtalmique mais également de défauts optiques à limiter de type déviation prismatique à ne pas dépasser. Ainsi, à l'étape e1), on cherche à satisfaire au mieux le critère d'ajustage sur la distance De, c'est-à-dire d'atteindre au mieux une valeur cible, tout en garantissant une bonne fonction optique, en limitant les déviations.

De façon plus générale, le critère d'ajustage de personnalisation comprend une contrainte sur au moins l'un des paramètres géométrico-morphologiques personnalisés suivants :

- une position relative des branches de la monture personnalisée par rapport aux oreilles ORD, ORG du porteur,
- un écartement des branches de la monture personnalisée, défini en fonction d'un écart déterminé entre les oreilles ORD, ORG,
- une optimisation de la surface de contact entre les éléments d'appui nasal de la monture personnalisée et le nez N du porteur,
- une position relative des cercles de la monture personnalisée et des yeux OD, OG du porteur,
- une position relative du contour des lentilles ophtalmique montées sur la monture personnalisée et des yeux OD, OG du porteur,
- une distance entre au moins un point singulier de la monture personnalisée et un point singulier de la tête du porteur,
- une distance entre au moins un point singulier du contour des lentilles ophtalmiques montées sur la monture personnalisée et un point singulier de la tête du porteur,
- une géométrie du contour de monture définie en fonction d'une géométrie des sourcils, arcades sourcilières ou pommettes du porteur,
- un angle entre une droite reliant les points saillants de la pommette JS et de l'arcade sourcilière SCS et le plan moyen du cercle PMC de la monture personnalisée disposé en regard, mesuré dans un plan perpendiculaire audit plan moyen du cercle de la monture,

- un angle entre une droite reliant le point sphénoïde P1 et un point PN de l'aile du nez du porteur et le plan moyen du cercle PMC correspondant de la monture, mesuré dans un plan parallèle au plan de Francfort PF de la tête du porteur.

Les distances et les points singuliers considérés ici sont par exemple choisis parmi ceux décrits pour la détermination du paramètre géométrico-morphologique de référence $PGM_{réf}$ de l'étape d1).

Lorsque ledit critère d'ajustage de personnalisation comprend une contrainte sur une distance entre un point singulier de la tête TS du porteur et au moins un point singulier des cercles de la monture personnalisée ou du contour des lentilles ophtalmiques montées sur la monture personnalisée, le critère d'ajustage de personnalisation est déterminé de telle sorte que cette distance soit supérieure à une valeur minimale de distance, ou de manière à minimiser un écart entre cette distance et une valeur cible de distance.

Cela revient à éviter tout contact entre la monture personnalisée et la tête TS du porteur en dehors des zones de la monture prévues à cet effet : éléments de support nasal et branches.

Le critère d'ajustage personnalisé peut par exemple comprendre des valeurs cibles pour différents paramètres géométriques personnalisés $P_{perso}$ en fonction de valeurs standards d'ajustage de la monture.

Par exemple, une valeur cible de la distance entre les yeux et la lentille ophtalmique, c'est-à-dire entre les sommets cornéens des yeux et un point de la face arrière de la lentille, est égale à 12 millimètres.

On peut également fixer une valeur cible de l'écart entre les cercles 11, 12 de la monture 10 et les sourcils SCD, SCG et/ou les pommettes J du porteur égale à 3 millimètres, par exemple.

On peut enfin fixer ainsi une valeur cible égale à 6 degrés pour l'angle pantoscopique AMV ou égale à 8 degrés pour la valeur de l'angle de galbe GG, GD de la monture 10.

Les valeurs cibles peuvent également être déterminées en fonction du matériau de la monture personnalisée : par exemple, pour un ajustage satisfaisant, on peut prévoir une valeur cible de l'écart entre les branches de la monture personnalisée en fonction de l'écart supérieur auriculaire, c'est-à-dire l'écart entre les sillons S des oreilles droites ORD et gauches ORG.

Pour des branches souples par exemple réalisées en métal et de fine épaisseur, la valeur cible de l'écart entre les branches est égale à l'écart supérieur auriculaire moins quinze millimètres.

Pour des branches semi-rigides, par exemple réalisées en métal et de forte épaisseur, la valeur cible de l'écart entre les branches est égale à l'écart supérieur auriculaire moins dix millimètres.

Pour des branches rigides, par exemple réalisées en plastique et de fine épaisseur, la valeur cible de l'écart entre les branches est égale à l'écart supérieur auriculaire moins cinq millimètres.

Pour des branches très rigides, par exemple réalisées en plastique et de forte épaisseur, la valeur cible de l'écart entre les branches est égale à l'écart supérieur auriculaire moins deux ou trois millimètres.

Les valeurs cibles peuvent être remplacées par des intervalles de valeurs cibles. Il peut s'agir également de valeurs maximales et/ou minimales.

On peut également prendre en compte d'autres critères empiriques, par exemple, imposer que la branche de la monture personnalisée se trouve en contact avec le sillon S de l'oreille ORG, ORD sur une longueur comprise entre 2 et 2,5 centimètres (figure 6) et qu'elle se situe à une distance comprise entre 2 et 5 millimètres du crâne du porteur. On peut également prévoir que la forme de la spatule soit adaptée tout le long du sillon de l'oreille. Cet ajustage permet une meilleure tenue de l'équipement personnalisé, notamment pour les porteurs ayant un nez assez plat, ayant une forte correction ou une activité dynamique importante.

En outre, dans un mode de réalisation précédemment évoqué, la monture personnalisée étant destinée à accueillir des lentilles de correction visuelle, la valeur dudit paramètre géométrique de personnalisation $P_{perso}$ de la monture personnalisée peut également être déterminée en fonction de la correction visuelle réalisée par les lentilles ophtalmiques.

A cet effet, le critère d'ajustage de personnalisation est déterminé en fonction de la correction visuelle réalisée par les lentilles ophtalmiques.

Plus précisément, les courbures de la face avant et de la face arrière de la lentille ophtalmique ainsi que son épaisseur peuvent varier fortement.

Ceci peut induire des contraintes particulières qui peuvent être prises en compte dans les critères d'ajustage de personnalisation.

Par exemple, connaissant la forme des cercles de la monture personnalisée et la correction visuelle associée aux lentilles ophtalmiques destinées à être montées dans la monture, il est possible de déterminer un angle de galbe optimal ou un intervalle d'angles de galbe optimaux de la monture personnalisée pour l'accueil de ces lentilles ophtalmiques.

On peut par ailleurs fixer une distance minimale entre le canthus externe de l'œil du porteur et le point du cercle de la monture personnalisée correspondant situé à la jonction avec la branche correspondante.

On détermine ensuite le paramètre géométrique de personnalisation, par exemple le galbe et/ou la longueur des branches en fonction de ces deux critères d'ajustage de personnalisation.

Par ailleurs, dans le mode de réalisation dans lequel la monture de référence 10 est une monture réelle, la détermination d'une valeur dudit paramètre géométrique de personnalisation $P_{perso}$ est réalisée avec la monture de référence 10 réelle positionnée sur la tête TS du porteur.

La détermination du paramètre géométrique de personnalisation P perso comporte alors par exemple les étapes suivantes (figure 7) :

a2) déterminer (bloc 200 de la figure 7) la monture de référence 10 réelle comprenant par exemple, la détermination de la valeur d'au moins un paramètre géométrique de référence sur ladite monture de référence 10,

b2) placer (bloc 300 de la figure 7) en position d'utilisation ladite monture de référence sur la tête du porteur,

c2) dans la position d'utilisation de l'étape b2), déterminer (bloc 400 de la figure 7) la valeur d'au moins un paramètre géométrico-morphologique de référence $PGM_{réf}$ lié à la position relative de ladite monture de référence 10 par rapport à la tête TS du porteur,

d2) à partir de cette valeur du paramètre géométrico-morphologique de référence $PGM_{réf}$ déterminé à l'étape c2) et du paramètre géométrique de référence déterminé à l'étape a2), déterminer (bloc 500 de la figure 7) au moins une valeur d'au moins un paramètre géométrique de personnalisation $P_{perso}$ de ladite monture personnalisée.

*Etape a2)*

On détermine, à l'étape a2), la valeur d'au moins un paramètre géométrique de référence de cette monture de référence.

Ce paramètre géométrique de référence est notamment destiné à permettre la mise à l'échelle des images capturées à l'étape c2).

En pratique, il s'agit de préférence d'une longueur caractéristique de la monture de référence 10, ou d'un angle caractéristique de la monture de référence 10. Il peut s'agir notamment du diamètre hors-tout d'un cercle de la monture de référence. Ce paramètre géométrique de référence présente l'avantage de pouvoir être déterminé facilement sur une image capturée de face comme de profil.

Il peut s'agir de toute autre longueur, par exemple la longueur de la première partie des branches 14, 15, la longueur des spatules 14A, 15A, l'écart entre les branche 14, 15, l'angle entre la spatule 14A, 15A et la première partie de la branche 14, 15 correspondante dans le plan O1Y1Z1 et dans le plan O1X1 Z1, la largeur du pont, la forme des cercles décrite par un ensemble de points Pi de coordonnées (Xi, Yi, Zi) dans le référentiel (O1X1Y1Z1), dans ce dernier cas la connaissance des points Pi de coordonnées (Xi, Yi, Zi) permet par calcul de déduire la valeur d'autres paramètres déjà cités, comme, par exemple, la longueur de pont ou l'angle de galbe.

La valeur de ce paramètre géométrique de référence est déterminée par exemple par une mesure réalisée directement sur la monture de référence 10 réelle. Cette mesure est par exemple réalisée par l'opticien.

Elle peut également être prédéterminée pour la monture de référence 10 et mise en mémoire dans les moyens informatique et électronique, en correspondance avec un identifiant de la monture de référence.

L'étape a2) consiste alors à récupérer cette donnée.

Enfin, la détermination de ce paramètre géométrique de référence de la monture de référence 10 peut être réalisée à partir d'une capture d'image en deux ou trois dimensions de la monture de référence 10.

*Etape b2)*

A l'étape b2), on place en position d'utilisation ladite monture de référence sur la tête du porteur.

La monture de référence 10 étant une monture réelle, elle est réellement placée à l'étape b2) sur la tête réelle du porteur.

C'est de préférence l'opticien qui réalise cette étape. L'étape correspond alors à une étape d'essayage de la monture de référence. L'opticien s'assure que le positionnement est relativement bon.

Cet ajustage est réalisé de manière empirique par l'opticien.

*Etape c2)*

Une fois la monture placée sur la tête du porteur, on détermine la valeur du paramètre géométrico-morphologique de référence $PGM_{réf}$.

Le positionnement de la monture de référence 10 sur la tête TS du porteur étant ici réel, on envisage les variantes suivantes.

Selon une première variante de cette étape c2), une mesure est réalisée à partir d'au moins une image capturée du porteur équipé de la monture de référence 10.

On utilise à cet effet un dispositif de capture d'image tel qu'une caméra ou un appareil de photographie numérique.

On réalise alors à l'étape c2) au moins une capture d'image de la tête TS du porteur équipé de la monture de référence 10. Cette capture d'image est de préférence réalisée par l'opticien.

Elle peut également être réalisée par le porteur, chez lui, à l'aide d'une webcam par exemple.

De préférence, l'opticien réalise la capture d'au moins deux images de la tête du porteur, vue sous deux angles différents.

On entend par là que l'orientation de la tête TS du porteur par rapport au plan de capture d'image est différente lors des deux captures d'image.

On capture par exemple une première image de la tête TS du porteur de face et une deuxième image de la tête TS du porteur de profil.

On détermine ensuite, à partir d'un traitement de la ou des images capturées, le ou les paramètres géométrico-morphologiques de référence $PGM_{réf}$ recherchés.

Selon une deuxième variante de l'étape c2), on mesure manuellement les paramètres géométrico-morphologiques de référence $PGM_{réf}$ recherchés sur la tête TS du porteur. Dans ce cas, l'opticien utilise des outils de mesure traditionnels, par exemple un réglet d'opticien, un rhinomètre pour les mesures spécifiques du nez, un céphalomètre pour les mesures spécifiques des écarts de tempes ou de tête, un rapporteur d'angle pour toute mesure d'angle.

Quelle que soit la variante envisagée pour réaliser cette étape c2), en pratique, comme précédemment, les paramètres géométrico-morphologiques de référence $PGM_{réf}$ recherchés dépendent à la fois de la géométrie de la monture de référence 10 et de la morphologie de la tête TS du porteur.

Les exemples et définitions données en référence à l'étape d1) du premier mode de réalisation de détermination des paramètres géométriques personnalisés s'appliquent ici.

*Etape d2)*

A l'étape d2), on détermine au moins une valeur d'au moins un paramètre géométrique de personnalisation $P_{perso}$ dudit équipement personnalisé à partir des valeurs du paramètre géométrico-morphologique de référence $PGM_{réf}$ déterminé à l'étape c2) et du paramètre géométrique de référence de ladite monture de référence 10 déterminé à l'étape a2).

La description faite de l'étape e1) s'applique à l'étape d2) de ce mode de réalisation.

Quel que soit le mode de réalisation envisagé, le paramètre géométrique de personnalisation déterminé à l'étape e1) ou d2) comporte au moins un des paramètres suivants :

-    l'angle de galbe,
-    l'angle pantoscopique,
-    la longueur des branches,
-    la largeur du pont,
-    la forme ou une des dimensions de la monture, par exemple la largeur ou la hauteur des cercles de la monture personnalisée, ou du contour des lentilles ophtalmiques dans le cas d'une monture personnalisée sans cercle ou semi cerclée,
-    le positionnement ou l'orientation des éléments d'appui de la monture personnalisée sur le nez N du porteur, en particulier des plaquettes lorsque la monture personnalisée en comprend, ou parfois du rebord de la monture personnalisée, dans le cas d'une monture personnalisée en plastique ne comportant pas de plaquettes.

Comme évoqué précédemment, quel que soit le mode de réalisation envisagé pour la détermination du paramètre géométrique de personnalisation $P_{perso}$, la monture personnalisée étant destinée à accueillir des lentilles ophtalmiques correctrices, la valeur dudit para-

mètre géométrique de personnalisation $P_{perso}$ de la monture personnalisée peut être déterminée en fonction de données relatives à la correction visuelle des lentilles.

Dans ce cas, le critère d'ajustage de personnalisation est déterminé en fonction de la correction visuelle réalisée par les lentilles.

En effet, dans certains cas d'utilisation, il est difficile de concilier les propriétés de protection de l'équipement optique, par exemple contre le soleil ou les poussières et la prescription du porteur, c'est-à-dire la correction visuelle réalisée par les lentilles montées dans la monture de cet équipement.

En effet, les montures non personnalisées offrant une protection satisfaisante sont en général fortement galbées.

En conséquence, pour des raisons tant techniques qu'esthétiques, les lentilles ophtalmiques destinées à être montées dans de telles montures non personnalisées doivent présenter une face avant dont la courbure est en accord avec la courbure de la monture.

Les lentilles ophtalmiques fournissant une correction d'un défaut visuel du type myopie sont peu adaptées à être montées dans ce type de monture car elles présentent une face avant plus plate que la forme de la monture.

Afin de personnaliser l'ensemble de l'équipement optique du porteur, on peut donc envisager de déterminer le galbe de la monture comme indiqué précédemment.

## Détermination de la définition géométrique de la monture personnalisée

Pour ce faire, on détermine alors de préférence une définition géométrique de ladite monture personnalisée en fonction au moins dudit paramètre géométrique de personnalisation $P_{perso}$ déterminé et de la forme de monture de référence choisie par le porteur (600 sur la figure 7).

Plusieurs variantes de réalisation sont envisagées pour déterminer la monture personnalisée.

Quelle que soit la variante de réalisation envisagée, cette étape de détermination de la monture personnalisée comprend les sous étapes suivantes, qui seront illustrées plus loin en référence aux différentes variantes:

- vérification de la faisabilité de réalisation de la monture personnalisée (et de l'équipement optique associé) et
- renvoi d'informations à un utilisateur du résultat de la vérification.

Ces étapes permettent de s'assurer que la monture personnalisée définie est bien correcte avant toute étape de fabrication, conception, ajustage de cette dernière.

Grâce à ces étapes, il est possible de déterminer plus particulièrement un équipement optique compatible avec la faisabilité de la monture et/ou des lentilles ophtalmiques ou qui permet d'accueillir les lentilles ophtalmiques conformes à la prescription du porteur.

Avantageusement, on s'assure, en outre, que la monture personnalisée déterminée n'entre pas en contact avec la tête TS du porteur en dehors de zones de contact prédéfinies.

On évite ainsi toute zone d'interférence indésirable entre la monture personnalisée et certaines parties de la tête TS du porteur.

Certains porteurs sont parfois limités dans le choix des montures par la forme même de leur tête. Par exemple, un porteur ayant un visage trop rond avec des pommettes saillantes ne pourra pas choisir une monture dont la dimension verticale hors tout est trop grande.

Le procédé selon l'invention permet de vérifier et de modifier le cas échéant par exemple la taille de la monture personnalisée afin d'éviter aux pommettes d'être en contact avec la partie basse des cercles de la monture personnalisée. De la même façon, il est possible de vérifier et d'adapter, le cas échéant, la monture personnalisée de manière à ce que la partie haute des cercles de la monture personnalisée ne soit pas en contact avec les sourcils du porteur. Une première variante de réalisation selon l'invention consiste à partir d'une monture initiale préexistante à la déformer de manière à obtenir la monture personnalisée souhaitée.

Ainsi, la détermination de la définition géométrique de ladite monture personnalisée comporte la sous-étape selon laquelle on déforme la définition géométrique de la monture initiale pour que la définition géométrique de la monture personnalisée, résultant de cette déformation, soit conforme audit paramètre géométrique de personnalisation $P_{perso}$ recherché.

Selon l'invention et dans la suite de la description, ladite monture initiale préexistante est la monture de référence 10 réelle ou virtuelle choisie par le porteur.

S'il apparaît par exemple que le choix de la monture de référence 10 n'est pas adapté à la forme de la tête du porteur ou à sa correction visuelle par exemple, une nouvelle monture de référence pourra être sélectionnée.

Cette nouvelle monture de référence pouvant présenter une forme et des caractéristiques de dimensions et/ou de matériau différente de celle de la monture de référence 10, une sous-étape préalable d'acquisition d'une définition géométrique initiale prédéfinie de cette nouvelle monture de référence est prévue.

L'acquisition de la définition géométrique initiale de la monture initiale correspond par exemple à une mesure d'une grandeur géométrique de la monture initiale réelle ou à la détermination par le calcul d'une telle grandeur géométrique dans le cas d'une monture initiale virtuelle. On détermine par exemple l'angle de galbe de la monture initiale.

Lors de l'étape de déformation de la définition géométrique initiale, si la grandeur géométrique mesurée ou calculée, par exemple l'angle de galbe, n'est pas égale, dans la définition de la monture initiale, à la valeur du paramètre géométrique de personnalisation $P_{perso}$ correspondante, on modifie la définition géométrique de la monture initiale de manière à obtenir, pour la monture personnalisée, la valeur souhaitée de cette grandeur géométrique, par exemple l'angle de galbe.

Ces sous-étapes peuvent être réalisées virtuellement, en déformant par calcul la définition de la monture initiale de manière à obtenir un modèle de la monture personnalisée, c'est-à-dire une monture personnalisée virtuelle, ou réellement, en déformant alors directement la monture initiale, qui constitue alors ladite définition géométrique de la monture initiale, de manière à obtenir une monture personnalisée réelle.

Dans le premier cas, on détermine alors la ou les déformations nécessaires de la monture initiale pour que la définition géométrique de la monture personnalisée soit conforme audit paramètre géométrique de personnalisation $P_{perso}$.

Une fois les déformations nécessaires de la monture initiale déterminées, on réalise un renvoi d'informations sur l'adéquation entre la capacité à se déformer de la monture initiale et la déformation nécessaire de celle-ci.

Ainsi, les moyens informatiques et électroniques réalisent, de préférence cette étape additionnelle de renvoi d'informations sur l'adéquation entre la capacité à se déformer de la monture et la déformation nécessaire de la monture initiale déterminée. Les moyens informatiques et électroniques peuvent être programmés pour déduire de la déformation nécessaire de la monture déterminée, un niveau de difficulté de la déformation de la monture initiale pour obtenir la monture personnalisée. Ce niveau de difficulté est transmis à l'opticien qui peut alors conseiller au porteur de choisir une autre monture initiale si la déformation se révèle trop difficile.

Une alerte peut être également émise si la déformation est impossible, par exemple si la déformation nécessaire dépasse les limites mécaniques de la monture et risque de l'endommager.

En effet, il est possible de prévoir des contraintes à ces déformations et/ou des valeurs limites de déformation à ne pas dépasser au risque d'endommager la monture, qui peuvent dépendre du matériau de la monture.

On peut ainsi prévoir dans une première variante de réalisation non comprise dans l'invention que les déformations soient réalisées sans ajout de matière et en restant dans les limites de déformation élastique des matériaux constitutifs de la monture initiale.

Dans ce cadre, les déformations à mettre en oeuvre sont celles qui restent dans un domaine proche du domaine élastique du matériau constitutif de la monture initiale.

Par ailleurs, il est très difficile voire impossible de régler sur des montures plastiques l'écartement des zones d'appui sur le nez, car ces zones sont directement intégrées aux cercles de la monture qui ne possèdent pas d'éléments d'appuis aussi flexibles que des plaquettes.

On définit au moins partiellement, sans contrainte, la monture personnalisée. Cela peut être réalisé par exemple à partir d'une monture préexistante, en la déformant de manière à obtenir la monture personnalisée souhaitée en autorisant les ajouts de matière et donc des déformations non élastiques du matériau de la monture initiale.

La déformation de la monture initiale est réalisée sans contrainte de conservation d'au moins l'une des dimensions suivantes de la monture initiale : le périmètre des cercles, la courbure de contour de la monture de référence. Dans une variante non comprise dans l'invention, la déformation de la monture initiale peut être réalisée sans contrainte de conservation de la longueur des branches et la longueur du pontet nasal de la monture initiale.

On détermine alors au moins partiellement la définition de l'équipement personnalisé en fonction des paramètres géométriques personnalisés $P_{perso}$ devant être obtenus, sur la base de la monture initiale choisie, mais sans se limiter à des déformations élastiques.

Lorsque la faisabilité de la monture personnalisée est confirmée, les déformations évaluées à l'étape précédente sont appliquées physiquement à la monture initiale pour obtenir la monture personnalisée.

En pratique, les déformations suivantes de la monture initiale sont envisagées afin de respecter les paramètres géométriques de personnalisation $P_{perso}$ déterminés.

Pour ajuster le positionnement des cercles devant les yeux et/ou limiter les zones de contact entre les cercles de la monture personnalisée et les pommettes J ou les sourcils SCD, SCG du porteur, il est possible de modifier l'écart entre les plaquettes de cette monture personnalisée. Le nez ayant une forme trapézoïdale, plus l'écart entre les plaquettes sera faible, plus la monture personnalisée se positionnera de manière haute sur le visage du porteur.

On peut également ajuster les bras des plaquettes pour éloigner ou rapprocher les plaquettes des cercles de la monture personnalisée et ainsi modifier la distance entre les yeux OD, OG et les lentilles ophtalmiques qui seront portées par la monture personnalisée 10.

Pour assurer l'horizontalité de la monture personnalisée et ajuster l'angle pantoscopique, on peut modifier l'inclinaison des branches par rapport aux cercles de la monture personnalisée. Cela permet également de régler le contact entre chaque branche et le sillon S de l'oreille ORD, ORG correspondante du porteur.

Pour assurer l'horizontalité de la monture personnalisée sur la tête TS du porteur par rapport aux sourcils ou par rapport aux yeux, il faut incliner vers le bas la branche du côté du cercle le plus bas ou incliner vers le haut la branche du côté du cercle le plus haut.

En fonction de la hauteur des oreilles ORD, ORG par rapport aux yeux, on peut incliner les branches vers le bas de la tête du porteur pour augmenter l'angle pantoscopique, ce qui favorise la vision de près du porteur ou incliner les branches pour diminuer l'angle pantoscopique, ce qui permet notamment de limiter le contact entre le bas des cercles de la monture et les pommettes.

L'ouverture des branches est initialement symétrique. Toutefois, si la façade de la monture personnalisée, qui comprend les cercles et le pont, n'est pas parallèle au visage du porteur, on peut ajuster le parallélisme en ouvrant plus la branche du côté de la façade le plus éloigné du visage du porteur.

Pour les montures personnalisées comportant des plaquettes montées sur un bras et non intégrés aux cercles, il est également possible de modifier la distance entre les surfaces de contact des plaquettes et les cercles de la monture personnalisée, ainsi que l'angle de face et l'ange de chasse de chaque plaquette.

La modification de la monture initiale peut également prendre en compte certaines limitations ou contraintes induites par la correction visuelle des lentilles ophtalmiques destinées à être montées dans la monture personnalisée.

On prend en compte par exemple l'épaisseur de la lentille ophtalmique.

Par exemple, une lentille ophtalmique fortement myope sera réalisée avec une face avant de base plate. L'angle de galbe de la monture personnalisée doit alors être limité. Réciproquement, pour les lentilles ophtalmiques hypermétropes qui présentent une courbure importante, l'angle de galbe de la monture personnalisée peut être plus important.

Lorsque la déformation de la monture initiale est libre de toute contrainte, suivant la morphologie du porteur, la forme de l'équipement optique est définie localement ou globalement. On peut adapter l'équipement personnalisé à la taille mais aussi aux traits du visage : pente du nez, forme du sourcil, pommettes, orientation temporale, par exemple.

L'exemple non limitatif suivant concerne la création ou la modification de la forme du contour de la monture (et donc de l'équipement) en fonction des données du visage du porteur.

Dans cet exemple, le paramètre géométrique de référence de l'étape a1) est un ensemble de points Ps de coordonnées (Xs, Ys, Zs) défini à partir du cercle de monture et sur un secteur angulaire couvrant au moins la longueur du sourcil du porteur lorsque ce dernier est vu de face. On modélise en particulier la zone haute du visage et les courbes des sourcils SCG et SCD à l'étape b1) puis on effectue le positionnement selon c1).

On utilise alors un paramètre géométrico-morphologique de référence $PGM_{réf}$ de l'étape d1) constitué d'une collection de distances Cs entre les points Ps de la monture de référence 10 et les points singuliers de la tête TS du porteur.

Les points servant à la construction de cette collection de distances sont choisis par un échantillonnage équidistant. Les distances formant la collection sont alors appréciées entre les points Ps et leur projection respectives P's sur le visage. On utilise ensuite un critère d'ajustage de personnalisation sur la collection Cs de distance de sorte que chacune des distances de la collection Cs soit comprise dans un intervalle de longueur, par exemple de 1 millimètre à 10 millimètres. Le paramètre géométrique personnalisé $P_{perso}$ obtenu à l'étape e1) est alors déterminé par calcul. Il est défini comme un ensemble de points P"s de coordonnées (X"s, Y"s, Z"s) pour lesquels le critère d'ajustage de personnalisation est satisfait.

Dans un exemple de réalisation, les points P"s peuvent être obtenus à partir des points Ps de telle sorte que la forme globale de la monture soit respectée.

On pourra imposer une contrainte supplémentaire entre les coordonnées des points Ps (Xs, Ys, Zs) et P"s (X"s, Y"s, Z"s) par exemple telle que X"s = f1(Xs) et Y"s = f2(Ys) et Z"s = f3(Zs) où f1, f2 et f3 sont trois fonctions prédéterminées. Dans ce cas l'équipement personnalisé est réalisé par la modification des coordonnées des points selon l'axe O1Z1.

Dans un autre exemple de réalisation, la forme globale de la monture peut être modifiée. Dans ce cadre, la relation entre les points Ps et P"s inclut une contrainte du type X"s = k * Xs et Y"s = Ys et Z"s = f(Zs), où f est une fonction de Zs prédéterminée. L'équipement personnalisé est alors réalisé par la modification en taille des cercles de la monture selon l'axe O1X1.

Dans le cas où la forme de la monture peut être modifiée localement, la relation entre les points Ps et P"s inclut une contrainte issue de la courbe des sourcils SCG (respectivement SCD). L'équipement personnalisé est ainsi réalisé par la modification de la forme des cercles de la monture de façon à transposer sur le cercle droit la forme de la courbe SCG. La contrainte est alors définie point à point entre les points Ps et les points du sourcil du porteur dans un secteur angulaire limité.

D'autres courbes issues de la zone médiane du visage pourront servir de la même façon à modifier la forme du contour.

Selon le principe énoncé ci-dessus il est possible de définir d'autres paramètres géométriques s'appuyant sur les méridiens horizontaux et verticaux du visage plutôt que sur les sourcils pour définir par exemple les courbures de la monture et/ou de la lentille ophtalmique. De façon implicite, on définit ainsi les paramètres de la monture tels que l'angle de galbe ou de dièdre, l'angle pantoscopique en fonction de ces traits du visage du porteur.

L'exemple non limitatif suivant concerne la détermination du paramètre géométrique personnalisé $P_{perso}$ de longueur de pont Lp.

Dans ce cas, le paramètre géométrique de référence de l'étape a1) est la longueur du pont Lp. Cette longueur est déterminée par exemple par la distance la plus courte entre les points Ps(g) et Ps(d) issus des formes de monture respectives gauche et droite. Le paramètre géométrico-morphologique de référence PGM$_{réf}$ déterminé est la zone de contact sur le nez du porteur. Le critère d'ajustage de personnalisation est la position correcte des plaquettes 16 A.

La nouvelle valeur de la longueur du pont personnalisée est établie à partir des points des cercles personnalisés P"s(g) et P"s(d) tels que P"s(g) = f(Ps(g)) et X"s(g) = Xs(g) + kxg avec kxg définie comme une constante calculée pour satisfaire le critère d'ajustage à gauche, et P"s(d) = f(Ps(d)) et X"s(d) = Xs(d) + kxd pour le coté droit. La longueur du pont personnalisée est définie par la relation suivante :

$$Lp'' = Lp + kxg + kxd.$$

Les possibilités de déformation de la monture initiale sont très nombreuses. Elles peuvent être obtenues seules ou en combinaisons des exemples cités ci-dessus.

Ce type de détermination est avantageusement utilisé lorsqu'il s'agit de montures percées, les caractéristiques de forme de monture sont alors faciles à mettre en oeuvre directement sur les lentilles ophtalmiques lors du détourage.

Optionnellement dans ce cas, le paramètre géométrico-morphologique est utilisé pour définir la courbure de la face avant des lentilles.

Par ailleurs, on peut prévoir d'imposer une contrainte assurant que la forme globale de la monture soit conservée, afin que le porteur reconnaisse la monture initiale choisie dans la monture personnalisée obtenue. Cette contrainte peut par exemple se traduire par des intervalles de valeurs autorisées pour les différentes déformations possibles de la monture initiale. On peut par exemple prévoir que le diamètre des cercles n'est pas modifié de plus de 10 %, que la longueur des branches ou la largeur totale de la façade de la monture n'est pas agrandie ou rétrécie de plus de 10%, que lorsque le cercle est décrit dans le système boxing le ratio des cotes horizontales et verticales associées au rectangle circonscrit à la forme n'est pas modifié de plus de 10 %, etc...

La définition obtenue de la monture personnalisée est alors une définition virtuelle sous la forme d'un modèle de la monture personnalisée.

On fabrique ensuite au moins une partie de la monture personnalisée conforme à cette définition par moulage ou par usinage dans le cas d'une monture personnalisée en plastique, par mise en forme pilotée numériquement dans le cas d'une monture personnalisée en métal ou par tout autre moyen de fabrication connu de l'homme du métier.

La monture personnalisée peut être réalisée au moins partiellement par prototypage rapide additif.

Dans une seconde variante de réalisation de l'étape de détermination de la monture personnalisée non comprise dans l'invention, la détermination de la définition géométrique de ladite monture personnalisée comporte l'accès à un registre de montures prédéfinies contenant, associés à chaque monture prédéfinie, un identifiant de la forme de la monture prédéfinie et au moins un paramètre géométrique de cette monture prédéfinie et la recherche dans ce registre d'au moins une monture prédéfinie dont la forme correspond à la forme de monture initiale choisie par le porteur et dont la géométrie satisfait, avec une marge de tolérance prédéfinie, au paramètre géométrique de ladite monture personnalisée.

Cette définition de la monture personnalisée est alors également une définition virtuelle sous la forme d'un modèle de la monture personnalisée.

Les moyens informatiques et électroniques réalisent, de préférence, une étape additionnelle de renvoi d'information sur l'adéquation entre la géométrie de la monture prédéfinie sélectionnée et celle de la monture initiale déterminée.

Ce renvoi est transmis à une personne prédéterminée comme par exemple l'opticien qui peut alors conseiller au porteur de choisir une autre monture initiale si aucune monture ne satisfait à la marge de tolérance prédéfinie.

Une alerte peut être également émise si la sélection d'une monture est impossible.

Lorsque la faisabilité de la monture personnalisée est confirmée, le choix définitif de la monture personnalisée est réalisé. La monture personnalisée peut alors être commandée ou fabriquée par tout moyen connu de l'homme du métier, comme expliqué plus loin.

Enfin, dans une troisième variante de réalisation de l'étape de détermination de la monture personnalisée non comprise dans l'invention, la détermination de la définition géométrique de la monture personnalisée comporte l'assemblage de définitions géométriques de parties constitutives de la monture comprenant au moins un élément d'appui nasal.

On peut également déterminer dans cette variante l'équipement personnalisé par l'assemblage de lentilles de stock et de parties constitutives de la monture personnalisée.

Des définitions géométriques complémentaires de la monture comprennent les branches et les cercles de cette monture.

Chacune de ces parties est respectivement sélectionnée par une recherche dans un registre contenant différentes formes et/ou dimensions de réalisation de la partie concernée, d'au moins une forme et/ou dimension de cette partie correspondant à la forme de monture choisie par le porteur et dont la géométrie satisfait, avec une marge de tolérance prédéfinie, au paramètre géométrique de personnalisation P$_{perso}$.

Cette définition de la monture personnalisée et de l'équipement associé est alors également une définition virtuelle sous la forme d'un modèle de la monture personnalisée.

Selon cette troisième possibilité, un choix ou une sélection des pièces constitutives de la monture personnalisée est fait. L'assemblage physique de ces pièces aboutit à la fabrication de la monture personnalisée.

A cet effet, on sélectionne, dans un jeu de pièces prédéfinies, celles permettant de construire la monture personnalisée.

Chacune des ces pièces constitutives est disponible en stock pour un nombre limité de tailles. Il peut s'agir de différentes longueurs de branches. Il peut s'agir également de formes de face avant de monture plus ou moins arrondies ou plus ou moins galbées.

Les moyens informatiques et électroniques réalisent, de préférence, une étape additionnelle de renvoi d'informations sur l'adéquation entre l'assemblage sélectionné et la monture initiale déterminée.

Ce renvoi est transmis à un utilisateur comme par exemple l'opticien qui peut alors conseiller au porteur de choisir une autre monture initiale si aucun assemblage ne satisfait à la marge de tolérance prédéfinie.

Une alerte peut être également émise si la sélection d'un assemblage est impossible.

Lorsque la faisabilité de la monture personnalisée est confirmée, l'assemblage est sélectionné et l'assemblage physique est réalisé.

Quelle que soit la possibilité mise en oeuvre pour déterminer la définition géométrique de la monture personnalisée, après avoir déterminé la définition géométrique de ladite monture personnalisée, on transmet cette définition géométrique au porteur pour validation par lui ou à l'opticien à des fins de contrôle de montage.

A titre d'exemple, on peut imaginer renvoyer une représentation de la monture sous forme d'abaque où figurent certaines cotes de la monture comme l'angle de galbe, l'angle pantoscopique, la hauteur de montage etc...

On peut également envisager de renvoyer une modélisation de la monture personnalisée permettant au porteur de réaliser un essayage virtuel de l'équipement optique personnalisé. Lors de cet essayage virtuel, la modélisation de la monture personnalisée est superposée à la modélisation de la tête TS du porteur et une représentation graphique de cette superposition est affichée pour le porteur.

Après avoir déterminé la définition géométrique de ladite monture personnalisée, on en déduit de préférence un paramètre géométrico-morphologique lié à la position relative de ladite monture personnalisée par rapport à la tête du porteur et on réalise un renvoi d'informations sur la conformité de la monture personnalisée obtenue par cette définition géométrique au critère d'ajustage de personnalisation.

En pratique, à cet effet, les moyens informatiques et électroniques peuvent réaliser une simulation du positionnement de la monture personnalisée obtenue sur la tête du porteur et une étape additionnelle de renvoi d'informations indiquant une position relative finale prévue de la monture personnalisée sur la tête du porteur.

Avantageusement, la superposition de la modélisation de la monture personnalisée sur la tête TS du porteur permet de déterminer le positionnement optimal de l'équipement optique personnalisé sur la tête TS du porteur. Les paramètres de port déterminés pourront être utilisés lors de la conception optique des lentilles ophtalmiques, en remplacement de paramètres de port mesurés sur le porteur.

L'optimisation lors de la conception optique des lentilles est alors plus précise.

Quelle que soit la variante de réalisation envisagée, on peut ainsi prévoir que l'on réalise un renvoi d'informations sur la faisabilité de la fabrication de la monture personnalisée, par exemple après avoir déterminé la définition géométrique de ladite monture personnalisée.

On peut en effet vérifier la compatibilité de la géométrie de la monture personnalisée obtenue avec les informations de fabrication : par exemple, on compare les caractéristiques de la monture personnalisée avec les valeurs minimale et maximale de la largeur du pont, et/ou de l'angle de galbe, et/ou de l'angle pantoscopique, et/ou de la longueur branche, et/ou de la courbure des lentilles ophtalmiques.

Si certaines caractéristiques de la monture personnalisée sont en dehors des plages de valeurs minimales et maximales possibles pour la fabrication de la monture personnalisée, on peut corriger la monture personnalisée en imposant pour ces caractéristiques les valeurs permises les plus proches.

On détermine alors une nouvelle définition de la monture personnalisée et on peut ensuite déterminer les paramètres géométrico-morphologiques associés à cette nouvelle définition afin de vérifier que les critères d'ajustage personnalisé sont respectés. Si cela n'est pas le cas, il est possible de renvoyer une alerte à l'utilisateur. Dans le cas où la définition géométrique de la monture personnalisée est réelle, il est possible de réaliser un essayage réel et des mesures telles que celles décrites lors de la réalisation de l'étape d2) pour la monture de référence afin de vérifier que les critères d'ajustage personnalisés sont bien respectés.

Ces différentes informations sont transmises à l'opérateur et peuvent constituer une aide à la décision dans le choix de la monture de lunettes.

De manière générale, quel que soit le mode de réalisation considéré, l'acquisition de données relatives à au moins une grandeur morphologique de la tête TS de porteur est réalisée sur un premier site et la détermination de la valeur dudit au moins un paramètre géométrique de personnalisation de la monture est réalisée sur un deuxième site distinct du premier.

Le premier site est de préférence localisé dans un lieu quelconque accessible soit physiquement par le porteur, soit sur un serveur, tandis que le deuxième site est situé chez un opticien, dans un laboratoire de montage d'équipements optiques, ou chez un fournisseur d'équipement optique en ligne.

La fabrication de la monture personnalisée est réalisée sur un troisième site, distinct du premier site, qui est soit distinct, soit confondu avec le deuxième site.

La détermination de la définition de la monture personnalisée et la fabrication de la monture personnalisée a lieu sur un troisième site, distinct du premier site, qui est soit distinct, soit confondu avec le deuxième site.

Il est prévu la transmission des données relatives à au moins une grandeur morphologique de la tête TS du porteur du premier site vers le deuxième site, la transmission de la valeur dudit au moins un paramètre géométrique de personnalisation $P_{perso}$ de la monture personnalisée du deuxième site vers le troisième site et le renvoi, à partir du troisième site, de la définition de la monture personnalisée et/ou de la monture personnalisée à partir du troisième site vers le premier.

En pratique, on envoie depuis le premier site situé dans le magasin de l'opticien ou chez le porteur, au moins les données morphologiques et de réfraction du porteur, vers le deuxième site.

Le deuxième site est un site de calcul spécialisé distant qui réalise le calcul de l'équipement personnalisé.

Les données géométriques sur la monture initiale peuvent être soit transmises du premier vers le deuxième site, soit récupérées par le deuxième site dans une base de données locale ou distante.

La définition de l'équipement personnalisé calculée sur le deuxième site est de préférence renvoyée au premier site afin que l'opticien et/ou le porteur puisse valider cet équipement, notamment après un essayage virtuel.

Eventuellement, un message indiquant l'impossibilité de personnalisation peut être renvoyé vers le premier site.

Après validation, le deuxième ou le troisième site transmet la définition de l'équipement personnalisé au troisième site de fabrication.

Le deuxième site peut également transmettre directement la définition de l'équipement personnalisé vers le troisième site de fabrication de cet équipement personnalisé.

**Revendications**

**1.** Procédé de fabrication d'une monture personnalisée à partir d'une définition géométrique d'un équipement optique personnalisé adapté à son porteur, comprenant au moins une définition géométrique d'une monture personnalisée de cet équipement personnalisé, la monture personnalisée étant destinée à accueillir des lentilles ophtalmiques personnalisées de correction visuelle et une définition géométrique d'au moins une desdites lentilles ophtalmiques personnalisées destinées à être montée dans ladite monture personnalisée, selon lequel :

- on identifie une monture de référence choisie par le porteur,
- on détermine la valeur d'au moins un paramètre géométrique de personnalisation ($P_{perso}$) de la monture personnalisée :

à partir de l'acquisition de données relatives à au moins une grandeur morphologique de la tête (TS) du porteur, de telle sorte que la monture personnalisée soit ajustée conformément à au moins un critère d'ajustage de personnalisation de la géométrie de la monture personnalisée par rapport à la grandeur morphologique de la tête (TS) du porteur, comprenant une contrainte sur au moins un paramètre géométrico-morphologique lié à la position relative de ladite monture personnalisée par rapport à la tête du porteur,

- on détermine la définition géométrique de ladite monture personnalisée en fonction dudit au moins un paramètre géométrique de personnalisation ($P_{perso}$) de la monture personnalisée et de la monture de référence (10) choisie par le porteur en déformant une définition géométrique de la monture de référence pour que la définition géométrique de la monture personnalisée, résultant de cette déformation, soit conforme audit paramètre géométrique de personnalisation ($P_{perso}$), avec un ajustage sur la tête (TS) du porteur conforme audit critère d'ajustage de personnalisation, sans contrainte de conservation d'au moins l'une des dimensions suivantes de la monture de référence : le périmètre des cercles, la courbure de contour de la monture de référence et
- on détermine la définition géométrique des lentilles ophtalmiques personnalisées conjointement avec la définition géométrique de la monture personnalisée, simultanément à celle-ci, et
- on fabrique ladite monture personnalisée conforme à ladite définition géométrique déterminée.

**2.** Procédé selon la revendication 1, selon lequel ledit au moins un paramètre géométrico-morphologique comprenant une distance entre un point singulier de la tête du porteur et au moins un point singulier des cercles de la monture personnalisée ou au moins un point singulier des lentilles montées sur la monture personnalisée ou au moins un point singulier du contour des lentilles montées sur la monture personnalisée, le critère d'ajustage de personnalisation est déterminé de telle sorte que cette distance soit supérieure à une valeur minimale de distance, ou de manière à minimiser un écart entre cette distance et une valeur cible de distance.

**3.** Procédé selon la revendication 1, selon lequel ledit paramètre géométrico-morphologique lié à la position relative de ladite monture personnalisée par rapport à la tête du porteur est l'un des suivants:

- une position relative des branches de la monture personnalisée par rapport aux oreilles (ORD, ORG) du porteur,
- un écartement des branches de la monture personnalisée, défini en fonction d'un écart déterminé entre les oreilles (ORD, ORG).
- une évaluation de la surface de contact entre les éléments d'appui nasal de la monture personnalisée et le nez (N) du porteur,
- une position relative des cercles de la monture personnalisée et des yeux (OD, OG) du porteur,
- une position relative des lentilles montées sur la monture personnalisée et des yeux (OD, OG) du porteur,
- une distance entre au moins un point singulier des cercles de la monture personnalisée et au moins un point singulier de la tête du porteur,
- une distance entre au moins un point singulier du contour des lentilles montées sur la monture personnalisée et un point singulier de la tête du porteur,
- une géométrie du contour définie en fonction d'une géométrie de sourcil (SCD, SCG), de l'arcade sourcilière (SC) ou de la pommette (JS) du porteur,
- un angle entre une droite reliant les points saillants de la pommette (JS) et de l'arcade sourcilière (SCS) et un plan moyen du cercle (PMC) de la monture personnalisée disposé en regard, mesuré dans un plan perpendiculaire audit plan moyen du cercle de la monture,
- un angle entre une droite reliant un point sphénoïde (P1) et un point (PN) de l'aile du nez du porteur et le plan moyen du cercle (PMC) correspondant de la monture, mesuré dans un plan parallèle à un plan de Francfort (PF) de la tête (TS) du porteur.

**4.** Procédé selon l'une des revendications précédentes, selon lequel la définition géométrique de ladite monture personnalisée comporte l'accès à un registre de montures contenant, associés à chaque monture, un identifiant de la forme de la monture et au moins un paramètre géométrique de cette monture et la recherche dans ce registre d'au moins une monture dont la forme correspond à la forme de monture choisie par le porteur et dont la géométrie satisfait, avec une marge de tolérance prédéfinie, au paramètre géométrique de personnalisation ($P_{perso}$) de ladite monture personnalisée.

**5.** Procédé selon la revendication 1, selon lequel on détermine la déformation nécessaire de la monture initiale pour que la définition géométrique de la monture personnalisée soit conforme audit paramètre géométrique de personnalisation ($P_{perso}$) et on réalise un renvoi d'information sur l'adéquation entre la capacité à se déformer de la monture initiale et la déformation nécessaire de celle-ci.

**6.** Procédé selon l'une des revendications précédentes, selon lequel, après avoir déterminé la définition géométrique de ladite monture personnalisée, on transmet cette définition géométrique au porteur pour validation par lui.

**7.** Procédé selon l'une des revendications précédentes, selon lequel, après avoir déterminé la définition géométrique de ladite monture personnalisée, on en déduit un paramètre géométrico-morphologique lié à la position relative de ladite monture personnalisée par rapport à la tête (TS) du porteur et on réalise un renvoi d'information sur la conformité de la monture personnalisée obtenue par cette définition géométrique au critère d'ajustage de personnalisation.

**8.** Procédé selon l'une des revendications précédentes selon lequel on réalise un renvoi d'information sur la faisabilité de la fabrication de la monture personnalisée ou de l'équipement personnalisé.

**9.** Procédé selon l'une des revendications précédentes, selon lequel l'acquisition de données relatives à au moins une grandeur morphologique de la tête (TS) de porteur est réalisée sur un premier site et la détermination de la valeur dudit au moins un paramètre géométrique de personnalisation de la monture est réalisée sur un deuxième site distinct du premier.

**10.** Procédé selon la revendication 9, selon lequel le premier site est localisé dans un lieu quelconque accessible soit physiquement par le porteur, soit sur un serveur, tandis que le deuxième site est situé chez un opticien, dans un laboratoire de montage d'équipements optiques, ou chez un fournisseur d'équipements optiques en ligne.

**11.** Procédé selon l'une des revendications 9 et 10, selon lequel la fabrication de la monture personnalisée a lieu sur un troisième site, distinct du premier site, qui est soit distinct, soit confondu avec le deuxième site.

**12.** Procédé selon la revendication 11, selon lequel il est prévu la transmission des données relatives à au moins ladite grandeur morphologique de la tête (TS) du porteur et d'un identifiant de la monture de référence du premier site vers le deuxième site, la transmission de la valeur dudit au moins un paramètre géométrique de personnalisation ($P_{perso}$) de la mon-

ture personnalisée du deuxième site vers le troisième site et le renvoi, à partir du troisième site, de la définition de la monture personnalisée et/ou de la monture personnalisée à partir du troisième site vers le premier.

13. Procédé selon la revendication 1, selon lequel le critère d'ajustage de personnalisation est déterminé en fonction de la correction visuelle réalisée par les lentilles.

14. Procédé selon la revendication 2, selon lequel la valeur cible de distance est déterminée en fonction du matériau de la monture personnalisée.

15. Procédé selon la revendication 1, selon lequel :

- ledit paramètre géométrique de personnalisation ($P_{perso}$) de la monture personnalisée comprend un angle de galbe de la monture personnalisée, et est déterminé i) en fonction de la correction visuelle réalisée par les lentilles et ii) à partir de l'acquisition de données relatives à au moins une grandeur morphologique de la tête (TS) du porteur, et
le paramètre géométrico-morphologique comprend une distance entre un point extrême (Pe) de la monture personnalisée situé du coté temporal d'un cercle de la monture personnalisée sur une ligne médiane horizontale définie comme la ligne qui coupe la forme des cercles de la monture en deux parties de hauteurs égales et un point (P'e) du visage du porteur déterminé par la projection sur le visage du point extrême (Pe) selon un axe fixe.

16. Procédé selon la revendication 1, selon lequel, la monture de référence identifiée est réelle et on fabrique ladite monture personnalisée conforme à ladite définition géométrique déterminée en déformant une monture initiale réelle.

**Patentansprüche**

1. Verfahren zur Herstellung eines personalisierten Gestells ausgehend von einer geometrischen Definition einer an ihren Träger angepassten personalisierten optischen Ausrüstung, das mindestens eine geometrische Definition eines personalisierten Gestells dieser personalisierten Ausrüstung, wobei das personalisierte Gestell dazu bestimmt ist, personalisierte ophthalmische Sehkorrekturlinsen aufzunehmen, und eine geometrische Definition mindestens einer der personalisierten ophthalmischen Linsen enthält, die dazu bestimmt sind, in das personalisierte Gestell montiert zu werden, wobei:

- ein vom Träger ausgewähltes Referenzgestell erkannt wird,
- der Wert mindestens eines geometrischen Personalisierungsparameters ($P_{perso}$) des personalisierten Gestells bestimmt wird:

ausgehend von der Erfassung von Daten bezüglich mindestens einer morphologischen Größe des Kopfes (TS) des Trägers, derart, dass das personalisierte Gestell gemäß mindestens einem Personalisierungseinstellkriterium der Geometrie des personalisierten Gestells bezüglich der morphologischen Größe des Kopfes (TS) des Trägers eingestellt wird, das eine Beschränkung auf mindestens einen geometrisch-morphologischen Parameter verbunden mit der relativen Position des personalisierten Gestells bezüglich des Kopfes des Trägers enthält,

- die geometrische Definition des personalisierten Gestells abhängig von dem mindestens einen geometrischen Personalisierungsparameter ($P_{perso}$) des personalisierten Gestells und dem vom Träger gewählten Referenzgestell (10) bestimmt wird, indem eine geometrische Definition des Referenzgestells verformt wird, damit die aus dieser Verformung resultierende geometrische Definition des personalisierten Gestells dem geometrischen Personalisierungsparameter ($P_{perso}$) entspricht, mit einer Einstellung am Kopf (TS) des Trägers entsprechend dem Personalisierungseinstellparameter, ohne Erhaltungsbeschränkung mindestens einer der folgenden Abmessungen des Referenzgestells: Umfang der Kreise, Konturkrümmung des Referenzgestells, und
- die geometrische Definition der personalisierten ophthalmischen Linsen zusammen mit der geometrischen Definition des personalisierten Gestells gleichzeitig mit dieser bestimmt wird, und
- das personalisierte Gestell entsprechend der bestimmten geometrischen Definition hergestellt wird.

2. Verfahren nach Anspruch 1, wobei, da der mindestens eine geometrisch-morphologische Parameter einen Abstand zwischen einem einzelnen Punkt des Kopfes des Trägers und mindestens einem einzelnen Punkt der Kreise des personalisierten Gestells oder mindestens einem einzelnen Punkt der auf das personalisierte Gestell montierten Linsen oder mindestens einem einzelnen Punkt der Kontur der auf das personalisierte Gestell montierten Linsen enthält, der Personalisierungseinstellparameter so bestimmt wird, dass dieser Abstand größer als ein Mindestabstandswert oder so ist, dass eine Abweichung zwischen diesem Abstand und einem Abstandszielwert minimiert wird.

3. Verfahren nach Anspruch 1, wobei der mit der relativen Position des personalisierten Gestells bezüglich des Kopfes des Trägers verbundene geometrisch-morphologische Parameter einer der folgenden ist:

    - eine relative Position der Bügel des personalisierten Gestells bezüglich der Ohren (ORD, ORG) des Trägers,
    - ein Spreizen der Schenkel des personalisierten Gestells, definiert abhängig von einem bestimmten Abstand zwischen den Ohren (ORD, ORG),
    - eine Bewertung der Kontaktfläche zwischen den Nasenauflageelementen des personalisierten Gestells und der Nase (N) des Trägers,
    - eine relative Position der Kreise des personalisierten Gestells und der Augen (OD, OG) des Trägers,
    - eine relative Position der auf das personalisierte Gestell montierten Linsen und der Augen (0D, OG) des Trägers,
    - ein Abstand zwischen mindestens einem einzelnen Punkt der Kreise des personalisierten Gestells und mindestens einem einzelnen Punkt des Kopfes des Trägers,
    - ein Abstand zwischen mindestens einem einzelnen Punkt der Kontur der auf das personalisierte Gestell montierten Linsen und einem einzelnen Punkt des Kopfes des Trägers,
    - eine Geometrie der Kontur definiert abhängig von einer Geometrie der Augenbraue (SCD, SCG), des Augenbrauenbogens (SC) oder des Wangenknochens (JS) des Trägers,
    - ein Winkel zwischen einer die vorspringenden Punkte des Wangenknochens (JS) und des Augenbrauenbogens (SCS) verbindenden Geraden und einer Mittelebene des gegenüber angeordneten Kreises (PMC) des personalisierten Gestells, gemessen in einer Ebene lotrecht zur Mittelebene des Kreises des Gestells,
    - ein Winkel zwischen einer einen Keilbeinpunkt (P1) und einen Punkt (PN) des Nasenflügels des Trägers verbindenden Geraden und der Mittelebene des entsprechenden Kreises (PMC) des Gestells, gemessen in einer Ebene parallel zu einer Ohr-Auge-Ebene (PF) des Kopfes (TS) des Trägers.

4. Verfahren nach einem der vorhergehenden Ansprüche, wobei die geometrische Definition des personalisierten Gestells den Zugriff auf ein Register von Gestellen, das jedem Gestell zugeordnet eine Kennung der Form des Gestells und mindestens einen geometrischen Parameter dieses Gestells enthält, und die Suche in diesem Register nach mindestens einem Gestell aufweist, dessen Form der vom Träger gewählten Gestellform entspricht und dessen Geometrie mit einem vordefinierten Toleranzbereich den geometrischen Personalisierungsparameter ($P_{perso}$) des personalisierten Gestells erfüllt.

5. Verfahren nach Anspruch 1, wobei die notwendige Verformung des Ausgangsgestells bestimmt wird, damit die geometrische Definition des personalisierten Gestells dem geometrischen Personalisierungsparameter ($P_{perso}$) entspricht, und eine Informationsweiterleitung über die Übereinstimmung zwischen der Fähigkeit des Ausgangsgestells sich zu verformen, und dessen notwendiger Verformung durchgeführt wird.

6. Verfahren nach einem der vorhergehenden Ansprüche, wobei nach der Bestimmung der geometrischen Definition des personalisierten Gestells diese geometrische Definition an den Träger zur Validierung durch ihn übertragen wird.

7. Verfahren nach einem der vorhergehenden Ansprüche, wobei nach der Bestimmung der geometrischen Definition des personalisierten Gestells ein geometrischmorphologischer Parameter davon abgeleitet wird, der mit der relativen Position des personalisierten Gestells bezüglich des Kopfes (TS) des Trägers verbunden ist, und eine Informationsweiterleitung über die Übereinstimmung des durch diese geometrische Definition erhaltenen personalisierten Gestells mit dem Personalisierungseinstellparameter durchgeführt wird.

8. Verfahren nach einem der vorhergehenden Ansprüche, wobei eine Informationsweiterleitung über die Machbarkeit der Herstellung des personalisierten Gestells oder der personalisierten Ausrüstung durchgeführt wird.

9. Verfahren nach einem der vorhergehenden Ansprüche, wobei die Erfassung von Daten bezüglich mindestens einer morphologischen Größe des Kopfes (TS) des Trägers an einem ersten Standort durchgeführt wird, und die Bestimmung des Werts des mindestens einen geometrischen Personalisierungsparameters des Gestells an einem zweiten Standort anders als der erste durchgeführt wird.

10. Verfahren nach Anspruch 9, wobei der erste Standort sich an einer beliebigen Stelle befindet, die entweder physisch vom Träger oder auf einem Server zugänglich ist, während der zweite Standort sich bei einem Optiker, in einem Montagelabor von optischen Ausrüstungen oder bei einem Online-Lieferanten von optischen Ausrüstungen befindet.

**11.** Verfahren nach einem der Ansprüche 9 und 10, wobei die Herstellung des personalisierten Gestells an einem dritten Standort stattfindet, anders als der erste Standort, der sich entweder vom zweiten Standort unterscheidet oder damit zusammenfällt.

**12.** Verfahren nach Anspruch 11, wobei die Übertragung der Daten bezüglich mindestens der morphologischen Größe des Kopfes (TS) des Trägers und einer Kennung des Referenzgestells vom ersten Standort zum zweiten Standort, die Übertragung des Werts des mindestens einen geometrischen Personalisierungsparameters ($P_{perso}$) des personalisierten Gestells vom zweiten Standort zum dritten Standort und die Weiterleitung, ausgehend vom dritten Standort, der Definition des personalisierten Gestells und/oder des personalisierten Gestells ausgehend vom dritten Standort zum ersten vorgesehen ist.

**13.** Verfahren nach Anspruch 1, wobei der Personalisierungseinstellparameter abhängig von der von den Linsen hergestellten Sehkorrektur bestimmt wird.

**14.** Verfahren nach Anspruch 2, wobei der Abstandszielwert abhängig vom Material des personalisierten Gestells bestimmt wird.

**15.** Verfahren nach Anspruch 1, wobei:

- der geometrische Personalisierungsparameter ($P_{perso}$) des personalisierten Gestells einen Rundungswinkel des personalisierten Gestells enthält, und i) abhängig von der durch die Linsen hergestellten Sehkorrektur und ii) ausgehend von der Erfassung von Daten bezüglich mindestens einer morphologischen Größe des Kopfes (TS) des Trägers bestimmt wird, und
- der geometrisch-morphologische Parameter einen Abstand zwischen einem Endpunkt (Pe) des personalisierten Gestells, der sich auf der Schläfenseite eines Kreises des personalisierten Gestells auf einer waagrechten Medianlinie befindet, die als die Linie definiert ist, die die Form der Kreise des Gestells in zwei Teile gleicher Höhen schneidet, und einem Punkt (P'e) des Gesichts des Trägers enthält, der durch die Projektion des Endpunkts (Pe) auf das Gesicht gemäß einer ortsfesten Achse bestimmt wird.

**16.** Verfahren nach Anspruch 1, wobei das erkannte Referenzgestell real ist und das personalisierte Gestell entsprechend der bestimmten geometrischen Definition hergestellt wird, indem ein reales Ausgangsgestell verformt wird.

**Claims**

**1.** Method for manufacturing a personalized frame based on a geometric definition of a piece of personalized optical equipment adapted to its wearer, comprising at least one geometric definition of a personalized frame of this piece of personalized equipment, the personalized frame being intended to accommodate visual correction personalized ophthalmic lenses and a geometric definition of at least one of said personalized ophthalmic lenses intended to be mounted in said personalized frame, wherein:

- a reference frame chosen by the wearer is identified,
- the value of at least one geometric parameter of personalization ($P_{perso}$) of the personalized frame is determined:

on the basis of the acquisition of data relating to at least one morphological quantity of the head (TS) of the wearer, in such a way that the personalized frame is adjusted to conform with a least one criterion of adjustment of personalization of the geometry of the personalized frame with respect to the morphological quantity of the head (TS) of the wearer, comprising a constraint on at least one geometrico-morphological parameter related to the relative position of said personalized frame with respect to the head of the wearer,

- the geometric definition of said personalized frame is determined based on said at least one geometric parameter of personalization ($P_{perso}$) of the personalized frame and of the reference frame (10) chosen by the wearer by deforming a geometric definition of the reference frame so that the geometric definition of the personalized frame resulting from this deformation conforms with said geometric parameter of personalization ($P_{perso}$), with an adjustment on the head (TS) of the wearer in conformity with said criterion of adjustment of personalization, without constraint on preservation of at least one of the following dimensions of the reference frame: the perimeter of the rims, the reference frame outline curvature, and
- the geometric definition of the personalized ophthalmic lenses is determined together with the geometric definition of the personalized frame, at the same time thereas, and
- said personalized frame is manufactured in conformity with said determined geometric definition.

**2.** Method according to Claim 1, wherein, said at least one geometrico-morphological parameter comprising a distance between a singular point of the head of the wearer and at least one singular point of the rims of the personalized frame or at least one singular point of the lenses mounted on the personalized frame or at least one singular point of the outline of the lenses mounted in the personalized frame, the criterion of adjustment of personalization is determined such that this distance is greater than a minimum distance value, or so as to minimize a difference between this distance and a target distance value.

**3.** Method according to Claim 1, wherein said geometrico-morphological parameter related to the relative position of said personalized frame with respect to the head of the wearer is one of the following:

- a relative position of the frame temples of the personalized frame with respect to the ears (ORD, ORG) of the wearer,
- a spacing of the frame temples of the personalized frame, said spacing being defined depending on a determined separation between the ears (ORD, ORG),
- an evaluation of the area of contact between the nose-rest elements of the personalized frame and the nose (N) of the wearer,
- a relative position of the rims of the personalized frame and the eyes (OD, OG) of the wearer,
- a relative position of the lenses mounted in the personalized frame and the eyes (OD, OG) of the wearer,
- a distance between at least one singular point of the rims of the personalized frame and at least one singular point of the head of the wearer,
- a distance between at least one singular point of the outline of the lenses mounted in the personalized frame and a singular point of the head of the wearer,
- a geometry of the outline, which geometry is defined depending on an eyebrow (SCD, SCG), superciliary-arch (SC) or cheekbone (JS) geometry of the wearer,
- an angle between a straight line connecting the salient points of the cheekbone (JS) and of the superciliary arch (SCS) and a mean plane (PMC) of the rim of the personalized frame placed facing, measured in a plane perpendicular to said mean plane of the rim of the frame,
- an angle between a straight line connecting a sphenoid point (P1) and a point (PN) of the side of the nose of the wearer and the mean plane (PMC) of the corresponding rim of the frame, measured in a plane parallel to a Frankfurt plane (PF) of the head (TS) of the wearer.

**4.** Method according to one of the preceding claims, wherein the geometric definition of said personalized frame includes accessing a register of frames containing, associated with each frame, an identifier of the shape of the frame and at least one geometric parameter of this frame and searching in this register for at least one frame the shape of which corresponds to the shape of frame chosen by the wearer and the geometry of which satisfies, with a predefined margin of tolerance, the geometric parameter of personalization ($P_{perso}$) of said personalized frame.

**5.** Method according to Claim 1, wherein the deformation of the initial frame required for the geometric definition of the personalized frame to conform with said geometric parameter of personalization ($P_{perso}$) is determined and information is returned on the compatibility between the ability of the initial frame to be deformed and the deformation required thereby.

**6.** Method according to one of the preceding claims, wherein, after the geometric definition of said personalized frame has been determined, this geometric definition is transmitted to the wearer for validation thereby.

**7.** Method according to one of the preceding claims, wherein, after the geometric definition of said personalized frame has been determined, a geometrico-morphological parameter related to the relative position of said personalized frame with respect to the head (TS) of the wearer is deduced therefrom and information is returned on whether the personalized frame obtained by this geometric definition is in conformity with the criterion of adjustment of personalization.

**8.** Method according to one of the preceding claims, wherein information is returned on the feasibility of the manufacture of the personalized frame or the piece of personalized equipment.

**9.** Method according to one of the preceding claims, wherein data relating to at least one morphological quantity of the head (TS) of the wearer are acquired at a first site and the value of said at least one geometric parameter of personalization of the frame is determined at a second site distinct from the first.

**10.** Method according to Claim 9, wherein the first site is located in any place accessible either physically by the wearer, or on a server, whereas the second site is located at an opticians, an optical laboratory, or an online supplier of optical equipment.

**11.** Method according to either of Claims 9 and 10, wherein the manufacture of the personalized frame takes place at a third site, distinct from the first site, which is either distinct from or the same as the second site.

12. Method according to Claim 11, wherein provision is made to transmit data relating to at least said morphological quantity of the head (TS) of the wearer and an identifier of the reference frame from the first site to the second site, to transmit the value of said at least one geometric parameter of personalization ($P_{perso}$) of the personalized frame from the second site to the third site and to return, from the third site, the definition of the personalized frame and/or of the personalized frame, from the third site to the first.

13. Method according to Claim 1, wherein the criterion of adjustment of personalization is determined depending on the visual correction realized by the lenses.

14. Method according to Claim 2, wherein the target distance value is determined depending on the material of the personalized frame.

15. Method according to Claim 1, wherein:

- said geometric parameter of personalization ($P_{perso}$) of the personalized frame comprises an angle of curvature of the personalized frame, and is determined i) depending on the visual correction realized by the lenses and ii) from the acquisition of data relating to at least one morphological quantity of the head (TS) of the wearer, and
- the geometrico-morphological parameter comprises a distance between an end point (Pe) of the personalized frame located on the temporal side of a rim of the personalized frame on a horizontal median line defined as the line that divides the shape of the rims of the frame into two parts of equal heights and a point (P'e) of the face of the wearer determined through projection of the end point (Pe) onto the face along a fixed axis.

16. Method according to Claim 1, wherein the identified reference frame is real and said personalized frame is manufactured in conformity with said determined geometric definition by deforming a real initial frame.

**Fig.1**

**Fig.2**

# Fig.3

Fig.4

**Fig.5**

TS

ORD S

P3    L3    P3

L10

P2    L2    P2

15

P1    L1    CROG

L9

P1

CROD

PMC    L8

PVO

PN

L11

L7    10    N

L6    PP

15    S

ORD

15A

**Fig.6**

100

300    200

400

**Fig.7**

500

600

## RÉFÉRENCES CITÉES DANS LA DESCRIPTION

**Documents brevets cités dans la description**

- EP 1011006 A
- US 20030123026 A
- US 4762407 A
- US 5121548 A